# EUROPEAN PATENT SPECIFICATION

(11) **EP 2 627 708 B1**
(45) Date of publication and mention of the grant of the patent: **13.05.2020**
(21) Application number: 11770403.1
(22) Date of filing: 07.10.2011
(51) Int. Cl.: C08L 61/00, C08L 61/06, C04B 14/00, C04B 16/00, C04B 28/02, C04B 40/00, C08K 3/26, C08K 5/00

(54) **DISPERSANT CONTAINING GYPSUM SLURRY**
DISPERSIONSMITTEL MIT EINER GIPSSUSPENSION
DISPERSANT CONTENANT UNE BOUILLIE DE GYPSE

(30) Priority: 11.10.2010 US 391796 P
(43) Date of publication of application: 21.08.2013
(73) Proprietor: BASF Construction Polymers GmbH, 83308 Trostberg (DE)
(72) Inventor: DIERSCHKE, Frank, 55276 Oppenheim (DE); PROSIEGEL, Klaus, 83308 Trostberg (DE); SCHINABECK, Michael, 83352 Altenmarkt (DE)
(74) Representative: BASF IP Association
(86) International application number: PCT/EP2011/067523
(87) International publication number: WO 2012/049077

(56) References cited:
- WO-A1-2010/026155
- WO-A1-2010/040612
- US-A1- 2008 108 732
- US-A1- 2009 054 558

## Description

The subject of the present invention is a gypsum containing aqueous slurry containing a phosphate based polycondensate as the sole agent with dispersing properties.

### BACKGROUND OF THE INVENTION

Conventional dispersants for cementitious and gypsum compositions typically achieve good water reduction, however, they are limited in their ability to retain workability over a long period of time. An alternate method for extended workability retention is the use of retarding admixtures. In this scenario, the benefit of workability retention is often achieved at the expense of setting times and early strength. The usefulness of these dispersants is therefore limited by their inherent limitations in molecular architecture.

Usual dispersants are static in their chemical structure over time in hydraulic systems. Their performance is controlled by monomer molar ratio that is fixed within a polymer molecule. A water reducing effect or dispersing effect is observed upon dispersant adsorption onto the hydraulic particle surface. As dispersant demand increases over time due to abrasion and hydration product formation, which creates more surface area, these conventional dispersants are unable to respond and workability is lost.

Typically, the issue of extended workability is solved by either re-tempering (adding more water) to the hydraulic compositions or by adding more high range water reducer. Addition of water leads to lower strength and thus creates a need for mixes that are "over-designed" in the way of hydraulic binder content.

Various types of organic compounds have been used to advantageously alter certain properties of wet hydraulic binder compositions. One class of components, which can collectively be called "superplasticizers", fluidify or plasticize wet binder compositions to obtain a more fluid mixture. A controlled fluidity is desired, such that the aggregate used in mortars and concretes does not segregate from the binder paste. Alternatively, superplasticizers may allow the cement composition to be prepared using a lower water: binder ratio in order to obtain a composition having a desired consistency which often leads to a hardened composition having a higher compressive strength development after setting.

A good superplasticizer should not only fluidify the wet hydraulic binder composition to which it is added, but also maintain the level of fluidity over a desired period of time. This time should be long enough to keep the wet composition fluid, e. g. in a ready-mix truck while it is on its way to a job site. Another important aspect relates to the period for discharging the truck at the job site and the period needed for the cement composition for being worked in the desired final form. On the other side, the hydraulic mixture cannot remain fluid for a too long time, that means the set must not greatly be retarded, because this will slow down the work on the job and show negative influences on the characteristics of the final hardened products.

Conventional examples of superplasticizers are melamine sulfonate/formaldehyde condensation products, naphthalene sulfonate/formaldehyde condensation products and lignosulfonates, polysaccharides, hydroxycarboxylic acids and their salts and carbohydrates.

In most cases, fluidizing agents are multi-component products with copolymers based on oxyalkylenglykolalkenylethers and unsaturated dicarboxylic acid-derivatives as most important species. The European Patent EP 0 736 553 B1 discloses such copolymers comprising at least three sub-units and especially one unsaturated dicarboxylic acid derivative, one oxyalkylenglykolalkenylether and additionally one hydrophobic structural unit, such as ester units. The third structural unit can also be represented by polypropylenoxid- and polypropylenoxid-polyethylenoxid-derivatives, respectively.

The German published application DE 195 43 304 A1 discloses an additive for water containing mixtures for the construction field comprising a) a water-soluble sulfonic acid-, carboxylic- or sulfate group containing cellulose derivative, b) a sulfonic acid- and/or carboxylic acid containing vinyl-(co)-polymer and/or a condensation product based on aminoplast-builders or acryl containing compounds and formaldehyde. This additive shall show sufficient water retention ability and rheology-modifying properties. Therefore, this additive shall be suitable for construction chemical compositions containing cement, lime, gypsum, anhydrite and other hydraulic binder components.

Copolymers based on unsaturated monocarboxylic or dicarboxylic acid derivatives, oxyalkylenglykolalkenylethers, vinylic polyalkylenglykol, polysiloxane or ester compounds used as additives for aqueous suspensions based on mineral or bituminous binders are described in US 6,777,517 B1. The use of such additives results in a decrease in the water/binder ratio and leads to highly fluid building materials without segregation of individual constituents from the building material mixture. The copolymers according to this U.S. patent are useful as additives for aqueous suspensions of inorganic and organic solids and especially for suspensions that are based on mineral or bituminous binders such as cement, plaster of paris, lime, anhydrite or other building materials based on calcium sulfate.

Disclosed by prior art also are copolymers of ethylenically unsaturated ethers that can be used as plasticizers for cement containing mixtures (EP 0 537 870 A1). These copolymers contain an ether co-monomer and as additional co-monomer an olefinic unsaturated mono-carboxylic acid or an ester or a salt thereof, or alternatively an olefinic unsaturated sulfuric acid. These copolymers show a very short ether side chain with 1 to 50 units. The short side chain causes a sufficient plasticizing effect of the copolymers in cement containing masses with a reduced slump loss of the construction chemicals mass itself.

US 6,139,623 B1 discloses an emulsion admixture for use in hydraulic cement compositions formed by emulsifying an antifoaming agent, a surfactant and a copolymer having a carbon-containing backbone to which are attached groups that function as cement-anchoring members by forming ionic bonds and oxyalkylene groups. This admixture comprising an ethylene oxide/propylene oxide (EO/PO) type comb polymer and an antifoaming agent allows a predictable air control in hydraulic cement compositions such as concrete. The term "cement composition" refers to pastes, mortars, grouts such as oil well cementing grouts, and concrete compositions comprising a hydraulic cement binder. Typical antifoaming agents are phosphate ester, borate ester and polyoxyalkylene copolymers with defoaming properties. The surface active component (surfactant) is said to stabilize the emulsion mixture and is chosen from the group consisting of an esterified fatty acid ester of a carbohydrate, a C₂ to C₂₀ alcohol having polyoxyalkylene groups or a mixture thereof.

US 2006/0281886 discloses a co-polymer comprising two monomer components with a component a) being an olefinic unsaturated monocarboxylic acid co-monomer or an ester or a salt thereof or an olefinic unsaturated sulfonic acid co-monomer or a salt thereof, and with component b) preferably represented by an ether compound. These two monomeric co-polymer can be preferably used as a superplasticizer in a hydraulic binder containing composition. There it is alternatively disclosed that the co-polymer can be used in combination with a defoaming component that is also an additional structural unit of the co-polymer. Consequently, the defoaming component can be chemically attached to the co-polymer or being present in free form in a blend. Under general aspects the prior art teaches the use of dispersing agents (plasticizers) such as polycarboxylate ethers (PCE) as typical additive for calcium sulfate containing binder systems. This results in a water reduction as well as in an enhancement of physical properties such as compressive strength. Additionally, the workability and preferably the rheological behavior of the construction chemicals composition are improved. On the other hand the addition of PCE based dispersants causes a distinct air entrainment to the binder component that worsens the physical properties of the composition. Another negative aspect is the foam formation during the preparation of the binder system. For overcoming these drawbacks defoamer components are used as additional additive to the dispersing agent. However, defoamers show a low solubility in aqueous formulations and cause an insufficient stability. Moreover, the defoaming properties of the formulation decrease over time due to the resulting phase separation of the defoamer and the dispersant.

Based on the different characteristics and the availability of the superplasticizers mentioned above, it has been further desired to come up with new formulations suitable as admixtures which are an improvement over the current state of the art. It is thus an object of this invention to provide new formulations for calcium sulfate binder containing compositions which impart to wet binder compositions excellent fluidizing and water reduction properties. Furthermore, the properties, the performance and effects of the provided copolymer shall be arbitrary.

In the production of gypsum plasterboard, in order to decrease the drying costs it is necessary to establish as low as possible a water/gypsum value. In addition, the gypsum mixture should set as rapidly as possible, so that the necessary cutting strength of the plate is attained on the conveyor line after as short a time as possible. For these reasons, dispersants based in particular on polycarboxylate ethers were developed (DE 10 2006 027 035 A1; US 7,070,648 B1).

US 2008/017078 teaches a liquid admixture composition for a calcium sulfate based binder system and a method of use. The disclosed admixture comprises an aqueous composition of a copolymeric dispersing component, an antifoaming agent component, a surfactant component and water. The components may be a blend or physically or chemically attached and result in a stable liquid system that can be used as dispersing agent for calcium sulfate compound containing construction chemicals composition. The admixture composition disclosed in this document and especially its application as dispersing agent represent a further improvement of this state of the art because the admixture with its contained aqueous composition induces a uniform plasticizing effect all the time and an improvement of the physical properties due to reduction of both water and air content in the wet construction chemicals gypsum mass. Furthermore, the admixture shows an improved storage stability and homogeneity.

Gypsum mixtures for foaming, solid and fast drying gypsum products and a method of making a gypsum slurry by using modifiers and dispersants are disclosed by US 2009/0101045, US 2006/0281837, US 2006/0280899, US 2006/0280898, US 2006/0278135, US 2006/0278134, US 2006/0278130, US 2006/0278127, US 2005/0250888, US 2005/0239924 and US 2006/0280970. The dispersants mentioned in these documents represent polycarboxylate dispersants, the dispersant having two repeating units with an olefinic unsaturated mono-carboxylic acid repeating unit and a vinyl or allyl-group bound to a polyether by an ether linkage as second repeating unit.

The results given in any of these documents confirm that such dispersants can be used to attain advantageous physical properties known from superplasticizers such as polycarboxylate ethers.

This invention also relates to gypsum products. More specifically, it relates to a gypsum-based structural panel that requires less time or less energy for drying than conventional products.

Gypsum-based panels are commonly used in construction. Wallboard made of gypsum is fire retardant and can be used in the construction of walls of almost any shape. It is used primarily as an interior wall or exterior wall or ceiling product. Gypsum has sound-deadening properties. It is relatively easily patched or replaced if it becomes damaged. There are a variety of decorative finishes that can be applied to the wallboard, including paint and wallpaper. Even with all of these advantages, it is still a relatively inexpensive building material.

One reason for the low cost of wallboard panels is that they are manufactured by a process that is fast and efficient. Calcium sulfate hemihydrate hydrates in the presence of water to form a matrix of interlocking calcium sulfate dihydrate crystals, causing it to set and to become firm. A slurry that includes the calcium sulfate hemihydrate and water is prepared in a mixer. When a homogeneous mixture is obtained, the slurry is continuously deposited on a moving surface that optionally includes a facing material. A second facing material is optionally applied thereover before the slurry is smoothed to a constant thickness and shaped into a continuous ribbon. The continuous ribbon thus formed is conveyed on a belt until the calcined gypsum is set, and the ribbon is thereafter cut to form panels of desired length, which panels are conveyed through a drying kiln to remove excess moisture. Since each of these steps takes only minutes, small changes in any of the process steps can lead to gross inefficiencies in the manufacturing process.

The amount of water added to form the slurry is in excess of that needed to complete the hydration reaction. Excess water gives the slurry sufficient fluidity to flow out of the mixer and onto the facing material to be shaped to an appropriate width and thickness. As the product starts to set, the water pools in the interstices between dihydrate crystals. The hydration reaction continues building the crystal matrix around the pools of water, using some of the pooled water to continue the reaction. When the hydration reactions are complete, the unused water occupying the pools leaves the matrix by evaporation. Interstitial voids are left in the gypsum matrix when all water has evaporated. The interstitial voids are larger and more numerous where large amounts of excess water are used.

While the product is wet, it is very heavy to move and relatively fragile. The excess water is removed from the board by evaporation. If the excess water were allowed to evaporate at room temperature, it would take a great deal of space to stack and store wallboard while it was allowed to air dry over a relatively lengthy time period or to have a conveyor long enough to provide adequate drying time. Until the board is set and relatively dry, it is somewhat fragile, so it must be protected from being crushed or damaged.

To hasten evaporation, the wallboard panel is usually dried by evaporating the excess water at elevated temperatures, for example, in an oven or kiln. It is relatively expensive to operate the kiln at elevated temperatures, particularly when the cost of fossil fuels rises. A reduction in production costs could be realized by reducing the amount of excess water present in set gypsum boards that is later removed by evaporation. Another reason to decrease excess water is that the strength of gypsum panels is, in some cases, inversely proportional to the amount of excess water used in its manufacture. Large numbers and size of the interstitial voids decrease the density and strength in the finished panel.

Dispersants are known for use with gypsum that help fluidize the mixture of water and calcium sulfate hemihydrate so that less water is needed to make a flowable slurry. β-Naphthalene sulfonate formaldehyde ("BNS") and melamine sulfonate formaldehyde ("MFS") condensate dispersants are well known, but have limited efficacy. The preparation and use of BNS is well known state of the art and disclosed in EP 0 214 412 A1 and DE-PS 2 007 603. The effect and properties of BNS can be modified by changing the molar ratio between formaldehyde and the naphthalene component that usually is from about 0.7 up to about 3.5. The ratio between formaldehyde and the sulfonated naphthalene component preferably is from about 0.8 to 3.5 to about 1. BNS condensates are added to the hydraulic binder containing composition in amounts from about 0.01 up to about 6.0 wt.%.

Melamine-sulfonate-formaldehyde-condensates are broadly used as flow improving agents in the processing of hydraulic binder containing compositions such as dry mortar mixtures, pourable mortars and other cement bonded construction materials and in the production of gypsum panels. Melamine is used in this connection as representative of s-triazine. They cause a strong liquefying effect of the construction chemicals mixture without any undesired side effects occurring in the processing or in the functional properties of the hardened building material. As it is for the BNS technology, there is also broad prior art for MFS. MFS dispersants are revealed in DE 196 09 614 A1, DE 44 11 797 A1, EP 0 059 353 A1 and DE 195 38 821 A1.

DE 196 09 614 A1 discloses a water soluble polycondensation product based on an amino-s-triazine and its use as plasticizer in aqueous binder containing suspensions based on cement, lime and gypsum. These polycondensates are capable in two condensation steps whereby in a pre-condensation step the amino-s-triazine, the formaldehyde component and the sulfite are condensed at a molar ratio of 1 to 0.5 : 5.0 to 0.1 : 1.5. Melamine is a preferred representative of amino-s-triazines. Further suitable representatives are aminoplast former selected from the group urea, thiourea, dicyandiamide or guanidine and guanidine salts.

According to DE 44 11 797 A1 sulfanilic acid-containing condensation products based on amino-s-triazines that show at least two amino groups are prepared by using formaldehyde. The sulfanilic acid is used in amounts of from 1.0 to 1.6 mol per mol amino-s-triazine and neutralized in aqueous solution with an alkaline metal hydroxide or in earth alkaline metal hydroxide. In an additional step the formaldehyde is added in amounts of from 3.0 to 4.0 mol per mol amino-s-triazine at a pH value between 5.0 to 7.0 and at temperatures between 50 and 90°C. The final viscosity of the solution is between 10 and 60 cSt at 80 °C.

According to EP 0 059 353 A1 highly concentrated and low viscose aqueous solutions of melamine/aldehyde resins are capable by reacting melamine and an aldehyde in an alkaline medium in a first step with a component selected from the group comprising alkali sulphate, earth alkali sulphate or (earth) alkali sulfonate or other suitable amino compounds to a pre-condensate. This mixture in an additional process step is reacted with another amino compound such as amino acids or amino carbonic acids and finally the resin solution is brought to an alkaline pH value.

DE 195 38 821 A1 discloses a condensate based on an amino-s-triazine with at least two amino groups and formaldehyde, and a high content of sulfonic acid groups and a low content of formate. Such products can be prepared according to this document by reacting the amino-s-triazine, formaldehyde and a sulfite at a molar ratio of 1 : 3.0 : 6.0 : 1.51 : 2.0 in an aqueous solution and at a temperature between 60 and 90 °C and a pH value between 9.0 and 13.0 until the sulfite is no longer present. In an additional step the condensation process is conducted at a pH value between 3.0 and 6.5 and at temperatures between 60 and 80 °C until the condensation product at 80 °C shows a viscosity between 5 and 50 mm²/s. Finally, the condensation product is to be brought to a pH value between 7.5 and 12.0 or treated thermally by a pH ≥ 10.0 and a temperature between 60 and 100°C.

Polycarboxylate dispersants are commonly used with cements and, to a lesser degree, with gypsum. The class of compounds represented by the term "polycarboxylate dispersants" is large, and it is very difficult to predict how individual compounds react in different media. The use of a two-monomer polycarboxylate dispersant in gypsum products is disclosed in U.S. Serial No. 11/152,418.

As has been previously disclosed, many polycarboxylate dispersants have deleterious effects on gypsum-based products. These dispersants retard setting of the calcined gypsum. The degree of retardation depends on the exact formulation of the polycarboxylate dispersant. Some polycarboxylate dispersants also cause a loss in compressive strength due to stabilization of foam. This leads to formation of smaller voids within the set gypsum. It is difficult to predict how severely a polycarboxylate dispersant will react in a gypsum slurry merely from the chemical formula.

A relatively new class of dispersants has become known for use in cements. It is a phosphated polycondensate dispersant. This dispersant is very effective both for use in cement and in gypsum slurries and in addition it shows a low set retardation.

WO 2006/042709 describes polycondensates based on an aromatic or heteroaromatic compound (A) having 5 to 10 C atoms or heteroatoms, having at least one oxyethylene or oxypropylene radical, and an aldehyde (C) selected from the group consisting of formaldehyde, glyoxylic acid and benzaldehyde or mixtures thereof, which result in an improved plasticizing effect of inorganic binder suspensions compared with the conventionally used polycondensates and maintain this effect over a longer period ("slump retention"). In a particular embodiment, these may also be phosphated polycondensates. The phosphated monomers used are, however, relatively expensive since they have to be separately prepared and purified.

US 2009/054558 is directed to a pulverulent polycondensation product, consisting of a) 5 to 95% by weight of a polycondensation product based on an aromatic or heteroaromatic compound (A) having 5 to 10 C atoms or heteroatoms having at least one oxyethylene or oxypropylene radical and one aldehyde (C) selected from the group consisting of formaldehyde, glyoxylic acid and benzaldehyde or mixtures thereof, and b) 5 to 95% by weight of a finely divided mineral carrier material having a specific surface area of 0.5 to 500 m2/g (according to BET as specified in DIN 66 131). The pulverulent polycondensation products suitable in construction material mixtures in an amount of from 0.1 to 5% by weight, based on the weight of the construction material. The pulverulent polycondensation products have a number of advantages, such as, for example, excellent storage stability, good liquefying action at low dosage and industrially simple production.

WO 2010/026155 concerns a process for the preparation of a hardening accelerator composition by reaction of a water-soluble calcium compound with a water-soluble silicate compound and a process for the preparation of a hardening accelerator composition by reaction of a calcium compound with a silicon dioxide containing component under alkaline conditions, in both cases the reaction of the water-soluble calcium compound with the water-soluble silicate compound being carried out in the presence of an aqueous solution which contains a water-soluble comb polymer suitable as a plasticizer for hydraulic binders. The invention concerns also a composition of calcium silicate hydrate and comb polymer, its use as hardening accelerator and for the reduction of the permeability of hardened compositions.

Alternatively, there has been developed an economical dispersant, based on a phosphated polycondensate, for hydraulic binders, which dispersant is particularly suitable as a plasticizer/water-reducing agent for concrete and can be prepared in a simple manner and at low cost. Such dispersants are described in the international applications WO 2010/04611 and WO 2010/ 04610.

Those who install gypsum panels become fatigued by continuously moving and lifting the panels. It is, therefore advantageous to make panels that are lightweight for ease in handling. Lightweight panels can be made by adding foam to the gypsum slurry. A foaming agent, such as soap, can be added to the slurry so that foam is produced by the mixing action. In some cases, the foaming agent is used to pregenerate a foam that is added to the slurry after it exits the mixer. The foaming agent is selected to produce a foam that is actively coalescing while hydration is taking place. A distribution of foam bubble sizes results from an "active" foam. As the hydration reactions proceed, the gypsum matrix builds up around the foam bubbles, leaving foam voids in the matrix when the set gypsum forms and the foam bubbles break.

It can be difficult to obtain a distribution of foam voids that results in an acceptable reduction in panel strength. Foam voids that are very small and numerous have very thin walls of gypsum matrix between them. Poor compressive strength of the finished panel may result. Formation of very large foam voids can produce unevenness in the surface of the panel, making it aesthetically unacceptable. It has been found that when the set gypsum has a distribution of large and small foam voids, the panel can have both strength and an aesthetically pleasing appearance. This foam void distribution can be achieved by using a combination of soaps that form stable foam and soaps that form unstable foam.

It is clear that design of a gypsum panel includes many variables that are interrelated. Dispersants used to reduce water also change the set time of the gypsum slurry. Some dispersants stabilize foam bubbles, while other dispersants destabilize the foam. Set accelerators that increase the hydration speed also reduce fluidity of the slurry. In addition to changing bubble size distribution, soaps restrict slurry fluidity. The additives used to control the slurry fluidity, hydration speed and foam bubble size distribution each affect multiple variables, making it difficult to strike a balance among all of these factors.

In this relation it is referred to the published patent applications WO 2010/04612 and WO 2010/04611, both of Construction Research & Technology GmbH, the pending and not published patent application PCT/EP2010/062168 of BASF Construction Polymers GmbH and the pending and not published patent application US Serial NO. 61/239,259 of United Gypsum Company.

It was therefore the object of the present invention to provide an economical and effective new gypsum slurry based on a suitable and well established dispersing component for inorganic binders, which dispersant is particularly suitable as a plasticizer/water reducing agent for concrete and other hydraulic binder based systems and that can be prepared in a simple manner and at low costs.

Provided by this invention therefore is a one dispersant formulation for extending workability to an inorganic binder and preferably a calcium sulfate containing mixture and water, comprising introducing into the gypsum slurry one defined dispersing component. The subject dispersant achieves a better workability and fluidibility of inorganic setting compositions and establishes a low water/binder value.

### DETAILED DESCRIPTION

The present invention relates to a gypsum slurry containing a compound with dispersing properties, characterized in that the slurry contains as dispersant a phosphate based polycondensation product as the sole agent with dispersing properties as an aqueous solution and in an amount of 0,01 to 0,5% by weight-% based on the gypsum content, the polycondensation product containing
(I) at least one structural unit with an aromatic or heteroaromatic sub-unit and a polyether side chain and
(II) at least one phosphated structural unit with an aromatic or heteroaromatic sub-unit,
   and preferably additionally
(III) at least one structural unit with an aromatic or heteroaromatic sub-unit,
structural unit (II) and structural unit (III) differing exclusively in that the OP(OH)₂ group of the structural unit (II) is replaced by H in structural unit (III), and structural unit (III) is not the same as structural unit (I).

The main aspect in connection with novelty and inventive step of this invention is to be seen in that the gypsum slurry contains the polycondensation product as the sole compound with dispersing properties. That means that the polycondensation product containing
(I) at least one structural unit with an aromatic or heteroaromatic sub-unit and a polyether side chain and
(II) at least one phosphated structural unit with an aromatic or heteroaromatic sub-unit,
   and preferably additionally
(III) at least one structural unit with an aromatic or heteroaromatic sub-unit,
structural unit (II) and structural unit (III) differing exclusively in that the OP(OH)₂ group of the structural unit (II) is replaced by H in structural unit (III), and structural unit (III) is not the same as structural unit (I), shows excellent effects in and on the gypsum slurry without being combined with other dispersants such as, but not limited to compounds at least containing a branched comb polymer having polyether side chains, a naphthalene sulphonate-formaldehyde condensate ("BNS") and a melamine sulphonate-formaldehyde condensate ("MSF"),
The term "hydraulic binder" according to this invention means cement and preferably Portland cement represented by CEM I, CEM II, CEM III, CEM IV and CEM V, white cement, quick lime and aluminate cement.

The term "latent hydraulic binder" according to this invention means at least one representative selected from the group fly ash, blast furnace slag, metakaoline, microsilica, trass compounds, alumosilicates, tuff, phomulithe, diatomaceous earth and oil shell.

The term "calcium sulfate compound" according to this invention means calcium sulfate in its anhydrous and hydrate forms, such as gypsum, anhydrite, calcium sulfate dihydrate and calcium sulfate hemi-hydrate.

The term "gypsum" according to this invention is also known as calcium sulfate, whereby calcium sulfate can be used in its various anhydrous and hydrate forms with or without crystal water. Natural gypsum is represented by calcium sulfate dihydrate and the natural crystal water free form of calcium sulfate is represented by the term "anhydrite". Besides the natural forms, calcium sulfate is a typical by-product of technical processes characterized by the term "synthetic gypsum". One example of such technical processes is the flue gas desulphurization. Synthetic gypsum may also be a by-product of phosphorous acid and hydrogen fluoride production methods for gaining hemi-hydrate forms (CaSO₄½H₂O). Gypsum (CaSO₄·2H₂O) may be calcinated by driving off the water of hydration. Products of the various calcinating procedures are alpha or beta hemi-hydrate. Beta calcium sulfate hemi-hydrate results from a rapid heating in open units by a rapid evaporation of water and by forming cavities. Alpha hemi-hydrate is produced by a de-watering of gypsum in closed autoclaves. The crystal form in this case is dense and therefore, this binder needs less amounts of water than beta hemi-hydrate. On the other hand, gypsum hemi-hydrate re-hydrates with water to dihydrate crystals. Usually, the hydration of gypsum needs some minutes to hours indicating a clearly shortened workability period in contrast to cements that hydrate in periods over hours or days. These characteristics make gypsum an attractive alternative to cement as hydraulic binder in various fields of application, because hardened final gypsum products show a characteristic hardness and compressive strength.

Calcium sulfate hemi-hydrate can produce at least two crystal forms, whereby α-calcined gypsum is usually de-watered (de-hydrated) in closed autoclaves. For various fields of application, β-calcined gypsum may be selected due to its availability under economical aspects. However, these advantages may be reversed because β-calcined gypsum needs higher water amounts for workability and for making slurries of a given fluidity. Hardened or dried gypsum tends to a certain weakening based on the remained water in its crystal matrix. Therefore, products thereof show less strength than gypsum products that have been made with smaller amounts of water.

In general, the workability of gypsum, but also of other hydraulic binders, can be improved under hydraulic aspects by adding dispersants.

The term "gypsum slurry" as may be used herein refers to pastes, mortars or grouts, each of them with a certain water content, that typically contain gypsum in its various forms, fine aggregates or fillers like usually sands or limestone, hydraulic, latent hydraulic and pozzolanic setting materials. Other formulation additives of the aqueous gypsum slurry are representatives from the group accelerators, retarders, anti-foaming agents, non-shrink agents, workability agents, pigments, hydrophobizing agents, stabilizers or rheology modifying agents.

### 1. Polycondensation product

As already discussed as state of the art admixtures in the form of dispersants are added to aqueous slurries or pulverulent inorganic or organic substances, such as clays, silicate powder, chalk, carbon black, crushed rock and hydraulic binders, for improving their processability, i.e. kneadability, spreadability, sprayability, pumpability or flowability. Such admixtures are capable of preventing the formation of solid agglomerates and of dispersing the particles already present and those newly formed by hydration and in this way improving the processability. This effect is utilized in particular in a targeted manner in the preparation of construction material mixtures which contain hydraulic binders, such as cement, lime, gypsum, hemi-hydrate or anhydrite.

In order to convert these construction material mixtures based on said binders, into a ready-to-use, processable form, as a rule substantially more mixing water is required than would be necessary for the subsequent hydration or hardening process. The proportion of voids which is formed in the concrete body by the excess, subsequently evaporating water leads to significantly poorer mechanical strengths and resistances.

In order to reduce this excess proportion of water at a predetermined processing consistency and/or to improve the processability at a predetermined water/binder ratio, admixtures are used which are generally referred to as water-reducing agents or plasticizers. In practice, in particular polycondensates and copolymers are used as such agents.

As already mentioned, there has been developed an economical dispersant, based on a phosphated polycondensate, for hydraulic binders, which dispersant is particularly suitable as a plasticizer/water-reducing agent for concrete and can be prepared in a simple manner and at low costs (see WO 2010/04611 and WO 2010/ 04610).

The object of this invention is achieved by a gypsum slurry containing a compound with dispersing properties, characterized in that the slurry contains as dispersant a polycondensation product containing
(I) at least one structural unit having an aromatic or heteroaromatic and a polyether side chain and
(II) at least one phosphated structural unit having an aromatic or heteroaromatic and
(III) at least one structural unit having an aromatic or heteroaromatic,
structural unit (II) and structural unit (III) differing exclusively in that the OP(OH)₂ group of the structural unit (II) is replaced by H in structural unit (III), and structural unit (III) is not the same as structural unit (I).

The structural units (I), (II) and if applicable (III) of the polycondensate of the claimed gypsum slurry can be described in more detail by the following general formulae 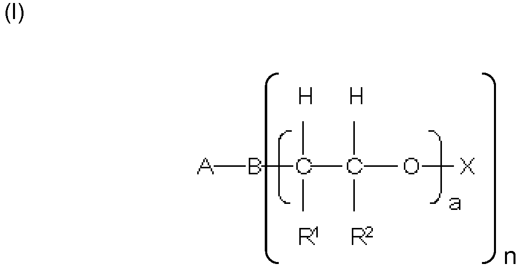 where
A are identical or different and are represented by a substituted or unsubstituted aromatic or heteroaromatic compound having 5 to 10 C atoms where
B are identical or different and are represented by N, NH or O
where
n = 2, if B = N and n = 1, if B = NH or O
where
R¹ and R², independently of one another, are identical or different and are represented by a branched or straight-chain C₁- to C₁₀-alkyl radical, C₅- to C₈-cycloalkyl radical, aryl radical, heteroaryl radical or H
where
a are identical or different and are represented by an integer from 1 to 300
where
X are identical or different and are represented by a branched or straight-chain C₁- to C₁₀-alkyl radical, C₅- to C₈-cycloalkyl radical, aryl radical, heteroaryl radical or H, 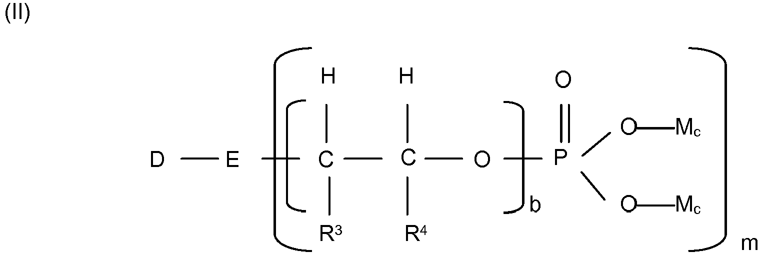 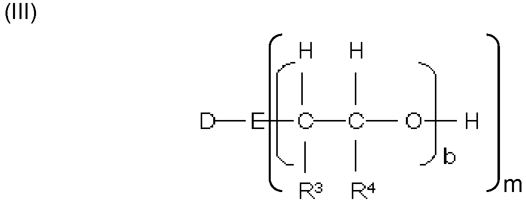
for (II) and (III) in each case:
where
D are identical or different and are represented by a substituted or unsubstituted heteroaromatic compound having 5 to 10 C atoms
where
E are identical or different and are represented by N, NH or O
where
m = 2 if E = N and m = 1 if E = NH or O
where
R³ and R⁴, independently of one another, are identical or different and are represented by a branched or straight-chain C₁- to C₁₀-alkyl radical, C₅- to C₈-cycloalkyl radical, aryl radical, heteroaryl radical or H
where
b are identical or different and are represented by an integer from 0 to 300,
where
M is independently of one another an alkaline metal ion, alkaline earth metal ion, ammonium ion, organic ammonium ion and/or H,
c is 1 or in the case of alkaline earth metal ions ½.

In a preferred embodiment, the polycondensate product contains a further structural unit (IV) which is represented by the following formula 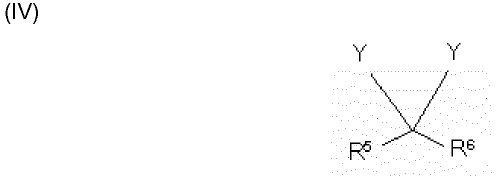
where
Y, independently of one another, are identical or different and are represented by (VII), (VIII), (IX) or further constituents of the polycondensate product
where
R⁵ are identical or different and are represented by H, CH₃, COOM_{c} or a substituted or unsubstituted aromatic or heteroaromatic compound having 5 to 10 C atoms
where
R⁶ are identical or different and are represented by H, CH₃, COOM_{c} or a substituted or unsubstituted aromatic or heteroaromatic compound having 5 to 10 C atoms,
where
M is independently of one another an alkaline metal ion, alkaline earth metal ion, ammonium ion, organic ammonium ion and/or H,
c is 1 or in the case of alkaline earth metal ions ½.

Here, R⁵ and R⁶ in structural unit (IV), independently of one another, are preferably represented by H, COOM_{c} and/or methyl.

The molar ratio of the structural units (I), (II), (III) and (IV) of the phosphated polycondensate according to the invention can be varied within wide ranges. This has proved to be expedient if the molar ratio of the structural units [(I) + (II) + (III)]:(IV) is 1:0.8 to 3, preferably 1:0.9 to 2 and particularly preferably 1:0.95 to 1.2.

The molar ratio of the structural units (I):[(II) + (III)] is usually 1:15 to 15:1, preferably 1:10 to 10:1 and more preferably 1:5 to 3:1.

In a further preferred embodiment, the molar ratio of the structural units (II):(III) is adjusted to 1:0.005 to 1:10, preferably 1:0.01 to 1:1, in particular 1:0.01 to 1:0.2 and more preferably 1:0.01 to 1:0.1.

The groups A and D in the structural units (I), (II) and (III) of the polycondensate are generally represented by phenyl, 2-hydroxyphenyl, 3-hydroxyphenyl, 4-hydroxyphenyl, 2-methoxyphenyl, 3-methoxyphenyl, 4-methoxyphenyl, naphthyl, 2-hydroxynaphthyl, 4-hydroxynaphthyl, 2-methoxynaphthyl, 4-methoxynaphthyl, preferably phenyl, it being possible for A and D to be chosen independently of one another and also in each case to consist of a mixture of said compounds. The groups B and E, independently of one another, are preferably represented by O.

The radicals R¹, R², R³ and R⁴ can be chosen independently of one another and are preferably represented by H, methyl, ethyl or phenyl, particularly preferably by H or methyl and especially preferably by H.

"a" in structural unit (I) is preferably represented by an integer from 5 to 280, in particular 10 to 160 and particularly preferably 12 to 120 and b in structural units (VIII) and (IX) by an integer from 0 to 10, preferably 1 to 7 and particularly preferably 1 to 5. The respective radicals, the length of which is defined by a and b, respectively, may consist here of uniform building blocks, but a mixture of different building blocks may also be expedient. Furthermore, the radicals of the structural units (VII) or (VIII) and (IX), independently of one another, may each have the same chain length, a and b each being represented by a number. As a rule, however, it will be expedient if mixtures having different chain lengths are present in each case so that the radicals of the structural units in the polycondensate have different numerical values for a and independently for b.

Frequently, the phosphated polycondensate product according to the present invention has a weight average molecular weight of 4000 g/mol to 150 000 g/mol, preferably 10 000 to 100 000 g/mol and particularly preferably 20 000 to 75 000 g/mol.

Furthermore, the present invention is directed to a slurry that contains the polycondensation product in formulated form, the formulated form containing the polycondensation product preferably in proportions of 5 to 100% by weight, more preferably of 10 to 60% by weight and particularly preferably of 15 to 40% by weight, based in each case on the total formulation.

As a rule, the phosphated polycondensate according to the invention is present in the claimed slurry as an aqueous solution and in an amount of preferably 0,05 to 0,2 weight-% of the solid polycondensate, with each amount based on the gypsum content.

In a particular embodiment, the invention furthermore envisages a sodium, potassium, ammonium and/or calcium salt and preferably a sodium and calcium salt, of the phosphated polycondensate. This is in order to obtain a better shelf life and better product properties. Sodium hydroxide, potassium hydroxide, ammonium hydroxide or calcium hydroxide has proved to be particularly expedient here, it being regarded as being preferred to neutralize the reaction mixture with the polycondensate product. However, other alkali metal and alkaline earth metal salts and salts of organic amine are suitable as salts of the phosphated polycondensates.

Furthermore, however, the present invention also provides a slurry containing mixed salts of the phosphated polycondensates. These can expediently be prepared by reacting the polycondensates with at least two basic compounds.

Thus, by a targeted choice of suitable alkali metal and/or alkaline earth metal hydroxides, it is possible by neutralization to prepare salts of the polycondensates according to the invention, with which the duration of the processability of aqueous suspensions of inorganic binders and in particular of concrete can be influenced. While a reduction in the processability over time is observable in the case of the sodium salt, a complete reversal of this behavior takes place in the case of the calcium salt of the identical polymer, a smaller water reduction (smaller slump) occurring at the beginning and increasing with time. As a result of this, sodium salts of the phosphated polycondensates lead over time to a decrease in the processability of the binder-containing material, such as, for example, concrete, mortar or gypsum slurries, whereas the corresponding calcium salts lead with time to improved processability. By suitable choice of the amount of sodium and calcium salts of the phosphated polycondensates used, the development of the processability of binder-containing materials can thus be controlled as a function of time. Expediently, the corresponding phosphated polycondensates, which consist of sodium and calcium salts, are prepared by reaction with a mixture of basic calcium and sodium compounds, in particular calcium hydroxide and sodium hydroxide.

Surprisingly, with a phosphated polycondensate according to the invention as sole dispersing component an improved efficiency was found in comparison with the polycondensates known in the prior art. It therefore a gypsum slurry containing the polycondensate product as the sole compound with dispersing properties is to be seen as a further preferred embodiment of the present invention. As additional favorable effect a significantly decreased retardation of the setting and hardening of the various construction compositions and especially of gypsum based slurries compared to other dispersants is to be observed, independently from the dosage of the dispersing component. This effect of the polycondensate component as well as an expedient influence on the pore structure surprisingly can be observed .

### 2. Additional components and aspects

In a specific embodiment the claimed formulation contains additionally to the polycondensate product at least one antifoaming agent as component a) and/or a component b) having a surface-active effect, the components a) and b) being structurally different from one another.

The antifoaming agent a) is preferably selected from the group consisting of a mineral oil, a vegetable oil, a silicon oil, a silicon containing emulsion, a fatty acid, a fatty acid ester, an organic modified polysiloxane, a borate ester, an alkoxylate, a polyoxialkylene copolymer, ethylene oxide (EO)-propylene oxide (PO) block polymer, acetylenic diols having defoaming properties and a phosphoric ester having the formula P(O) (O-R₈)₃₋ₓ(O-R₉)ₓ wherein P represents phosphorus, O represents oxygen and R₈ and R₉ are independently a C₂-C₂₀ alkyl or an aryl group and x = 0, 1, 2, whereby an alkyl group with C2-C8 is preferred.

Preferably said antifoaming agent a) comprises trialkyl phosphate, polyoxypropylene copolymer and/or glycerol/alcohol acetate, and more preferably triiso-butylphosphate.

The invention additionally comprises an admixture wherein said antifoaming agent a) comprises a mixture of a tri-alkylphosphate and a polyoxypropylene copolymer.

The second optional component of the formulation, namely the surfactant, is preferably selected from the group consisting of a ethylene oxide/propylene oxide (EO/PO) block copolymer, a styrene/maleic acid copolymer, a fatty alcohol alkoxylate, an alcohol ethoxylate R₁₀-(EO)-H with R₁₀ being an aliphatic hydrocarbon group having from 1 to 25 carbon atoms, acetylenic diols, monoalkylpolyalkylenes, ethoxylated nonylphenols, alkylsulfates, alkylethersulfats, alkylethersulfonates, alkyl ether carboxylates.

More preferably surfactant component b) comprises an alcohol having a polyalkylene group consisting of a carbon chain length of 2 to 20 carbon atoms, with a specific carbon chain length of C₃-C₁₂.

Advantageously the gypsum slurry according to the invention comprises an aqueous composition that contains the antifoaming agent component a) in free form or attached to the dispersing polycondensate product. If the antifoaming agent is attached to the dispersing component it can be physically or chemically attached, and the chemically attached in this case in polymerized and/or grafted form being preferred. When chemically attached, the antifoaming agent a) also can be considered as a further co-monomer to the units (I), (II) and/or (III). In its free form the antifoaming agent a) is a blend component of the dispersing formulation. Thus, antifoaming agent component a) is either physically and/or chemically attached to the dispersing and/or it is a free form component and therefore constituent of a blend.

In a further embodiment the antifoaming component a) is present in amounts of 0.01 to 10% by weight and/or the surface-active component b) is present in amounts of 0.01 to 10% by weight, based in each case on the total weight of the formulation, containing as main component the polycondensate product and being prepared for the addition to the gypsum slurry. According to a preferred embodiment the antifoaming agent a) and/or the surface-active component b), independently of one another, are present in each case in an amount of 0.01 to 5% by weight, based in each case again on the total weight of the formulation.

The present invention additionally comprises an embodiment whereby the formulation to be added to the gypsum slurry in addition to the polycondensate product and the components a) and b), contains at least one further compound c) selected from the group consisting of a polymer having a low charge, a neutral polymer or polyvinyl alcohol. The component c) plays a major role in gypsum composition with certain clay contents.

In the use of clay-containing forms of gypsum, and particularly natural gypsum, it can be observed that considerable quantities of the dispersant (fluidizing agent) used are absorbed or adsorbed by the clay mineral, as a result of which they are no longer available for the fluidization of the gypsum hemi-hydrate in the gypsum mixture.

To solve this problem, attempts were made to use so-called sacrificial substances, which in competition with the dispersant bind more strongly to the surface of the clay particles and in this way either mask these so that they are no longer accessible to the dispersant, or largely flocculate the clay particles.

It has been observed that a formulation based on a branched comb polymer with ethylene oxide (EO) units in the side-chains for the dispersion of clay-containing gypsum mixtures are capable of masking clay minerals such as are in particular contained in natural gypsum to a sufficient extent that the surfaces thereof are no longer available for the adsorption of dispersants. They have no adverse effect on the fluidization and consistency of the wet and unhardened gypsum mixture and they are stable to the temperatures used in the drying of the gypsum products, so that no odour problems arise.

With component c) according to the present invention, the surface of the clay particles can be more effectively coated through the bunching of flexible EO side-chains on a polymer backbone or the clay particles can themselves be better flocculated overall. Because of the lower charge density, the component c) can adsorb mainly on the clay and not on the binder such as gypsum hemi-hydrate.

Evidently a not insignificant role in the effects is played by the side-chains of the "sacrificial substance". These must include EO units; however, the side-chains can also in addition have polyethylene oxide (PO) units. The same applies for the main substance contained in the formulation according to the invention, the comb polymer with dispersant properties; this can contain either EO or PO units or both in its side-chains. Here the mixed modifications can also each be implemented in at least one, that is the same, side-chain.

Overall, it can be stated that from the chemical point of view the component c) optionally contained in the gypsum slurry or in the polycondensate containing formulation according to the invention as a sacrificial substance differs significantly from the polycondensate dispersant also used in the clay-containing gypsums, since it consists inter alia of polycarboxylate ethers. The difference consists in the charge state, since only representatives with low or neutral charge are possible as the sacrificial substance. In other words, the manufacture of gypsum products in particular can also be effected with the aid of dispersants which inter alia consist of copolymer mixtures wherein the low-charge or neutral polymer fractions predominantly mask the clay minerals and thus enable the remaining dispersant content to exert its actual fluidizing agent action.

The advantageous action of the present invention and mainly based on the dispersant is displayed in essentially all clay-containing gypsum mixtures. However, the positive action is especially pronounced in gypsum systems which contain at least one representative of the series calcium sulphate, calcium sulphate semi-hydrate or calcium sulphate hemi-hydrate, anhydrite and gypsum.

It therefore are preferred embodiments of the invention that the gypsum slurry under general aspects contains clay in whatsoever form and/or that the gypsum component of the slurry contains clay.

The clay fraction in the gypsum slurry should preferably be swellable and in particular water swellable and derive from the series of the smectites, montmorillonites, bentonites, vermiculites, hectorites or from the series of the kaolins, feldspars and micas such as for example illite and mixtures thereof.

Essentially, care should be taken that the clay contents in the gypsum mixtures do not exceed certain limits. For this reason, the present invention recommends clay contents in the gypsum slurry of ≤ 20 wt.%, preferably ≤ 15 wt.%, preferably ≤ 10 wt.% and especially preferably between 0.5 and 5 wt.%, each based on the gypsum component.

For the polymer component c), proportions from 0.01 to 0.40 wt.%, preferably from 0.02 to 0.30 wt.%, preferably from 0.03 to 0.15 wt.% and especially preferably from 0.5 to 0.10 wt.%, each again based on the gypsum component, are recommended.

In a further embodiment of the invention the formulation contains the component c) in amounts of 1 to 50% by weight, preferably of 5 to 40% by weight and particularly preferably in amounts of 10 to 30% by weight, based in each case on the total weight of the formulation, with the polycondensate product as the main component.

In the context of the present invention, the polymer component c), which interacts with the clay particles in the gypsum mixture, is of particular significance. In the case of a low-charge polymer as component c) this should be branched, the side-chain preferably consisting of a polyether. Polycarboxylate ethers and/or polycarboxylate esters, preferably with EO side-chains and with a carboxylate content up to 83 mol.%, and preferably up to 75 mol.% are to be regarded as especially preferred in this connection.

As already stated, such polycarboxylate ethers should advantageously include at least one polycarboxylate derivative (ether, ester); in particular if this has a low charge content, it cannot on account of its specific properties adsorb for example onto gypsum to the necessary extent. For this reason, the generally known dispersant action of polycarboxylate ethers and esters in particular does not occur to the necessary extent in this case. Hence the content of the charge-bearing component is important for the dispersant action of such representatives.

If a low-charge polymer with a polyether side-chain is used as component e), then this should be made up of at least one monomer selected from the series polyether monoacrylate, polyether monomethacrylate, polyether monoallyl ether, polyether monomaleate, monovinylated polyether or mixtures thereof. In the case of a polyether, this can be an alkylene oxide polymer with a molecular weight from 500 to 10 000, preferably from 750 to 7500 and in particular from 1000 to 5000. As representative alkylene oxide polymers, those based on an ethylene oxide, propylene oxide, butylene oxide or mixtures thereof may be mentioned.

Low-charge polymers which are built up of at least one monomer selected from the series polypropylene glycol acrylates, polypropylene glycol methacrylates, polyethylene glycol acrylates, polyethylene glycol methacrylates, polypropylene glycol monovinyl ethers, polythylene glycol monovinyl ethers, alkoxy or aryloxypolyethylene glycol acrylates, alkoxy or aryloxypolyethylene glycol methacrylates, alkoxy or aryloxypolyethylene glycol monovinyl ethers, acrylates, methacrylates and monovinyl ethers of an oxyethylene and oxypropylene block or randomized copolymer, polypropylene glycol allyl ether, polyethylene glycol allyl ether, polyethylene glycol monomaleate, polypropylene glycol monomaleate and any mixtures thereof have been found especially suitable.

It can be seen as preferred embodiment that the polymer c) having a low charge carries a carboxylic acid group, preferably selected from the series consisting of acrylic acid, methacryl acid, maleic acid, fumaric acid, itaconic acid or anhydrides thereof.

According to the invention, the low-charge polymer can also bear a carboxylic acid and/or sulphonic acid groups. In this case, the present invention specifies that the carboxylic acid group is preferably at least one representative of the series acrylic acid, methacrylic acid, maleic acid, fumaric acid, itaconic acid or anhydrides thereof. 2-Acrylamido-2-methylpropanesulphonic acid (AMPS), vinylsulphonic acid, allyl ether sulphonic acid, 2-sulphoethylmethacrylic acid, styrenesulphonic acid, methallyl-sulphonic acid, and sodium, potassium and ammonium salts and any mixtures thereof, are preferred representatives of compounds which make sulphonic acid groups available. AMPS and vinylsulphonic acid are to be regarded as especially preferable.

In the case of neutral polymers as component c), these should be made up of neutral monomer building blocks, which are in particular selected from the series acrylic acid alkyl esters and methacrylic acid alkyl esters and hydroxyalkyl esters thereof with up to 5 carbon atoms. Particularly suitable in this case are hydroxyethyl acrylate and hydroxypropyl acrylate and hydroxyethyl methacrylate and hydroxypropyl methacrylate. Also possible are vinyl acetate, N-vinylpyrrolidone, N-vinylcaprolactam, styrene and methylstyrene.

It's also worth to underline that in clay containing gypsum slurries significantly less amounts of the phosphated polycondensate are necessary compared to branched comb polymer having polyether side chains (such as but not limited to polycarboxylate ether), but also to a naphthalene sulphonate-formaldehyde condensate ("BNS") and a melamine sulphonate-formaldehyde condensate ("MSF"), whereby these phosphated polycondensates are also suitable for masking clays, preferably in activated form, in the gypsum slurry. A typical clay activation can be by methods of calcination, such as treatments at elevated temperatures.

### 3. Method of Use

Beside the gypsum slurry itself, whereby the gypsum is selected from the group calcium sulphate, calcined gypsum, calcium sulfate hemihydrate, calcium sulfate anhydrite, plaster of Paris, or synthetic gypsums, preferably formed as a by-product of flue gas desulfurization, and the polycondensate product, preferably in formulated form, a method of use of the slurry preferably for providing a building panel and more preferably a gypsum board states a further embodiment of the present invention.

Gypsum panels are made from a slurry on high-speed manufacturing equipment. Efficient manufacturing of gypsum slurries or panels requires control over the product properties. A gypsum panel including additives and a method for adjusting these additives provides improved control over the manufacturing process and an improved product.

As used herein, "efficacy" is a measure of a dispersant's ability to improve the fluidity of a gypsum slurry at constant dispersant dosage. If improved fluidity is not needed, improvements in efficacy can be used to reduce the amount of water used to fluidize the slurry while holding the fluidity, or "slump," constant. A decision as to which of these choices to select is based on a number of things including the product to be made, the raw materials, process configurations and economics.

"Hydration speed" is a measure of the speed of the hydration reactions. In some manufacturing facilities, it is important to achieve a certain degree of set, typically 50%, at the knife where the gypsum is cut into individual panels.

"Gypsum bubble structure" refers to the sizes of individual bubbles in the slurry after the foam has been added. It should be understood that the foam bubbles in the slurry form the foam voids in the set gypsum panel when the calcium sulfate dihydrate crystals form around the soap bubble. Thus, the sizes of the voids are determined by the sizes of the bubbles from which they are made. Three types of structures are often achieved in panels of constant density, each of which can be desirable in different products. A small void size structure has small bubbles in a relatively narrow size range.

The use of certain formulations for controlling the flowability of aqueous suspensions used in construction chemistry and in particular in aqueous suspensions containing hydraulic and/or latent hydraulic binders is of main interest. The formulations are used in particular as composition with dispersing properties. Regarding aqueous gypsum suspensions it is a further embodiment that these compositions contain, as a hydraulic binder at least one representative selected from the group consisting of calcium sulphate-based compounds, in particular calcium sulphate hemi-hydrate, anhydrite or gypsum. The aqueous slurry according to the present invention preferably is based on a dry mortar composition or a flooring composition. In a further embodiment the flooring composition contains calcium sulphate, and preferably is a self-leveling flooring composition, then - containing certain amounts of water - in the form of a slurry.

A gypsum building panel is made using stucco and water to form a calcium sulfate dihydrate crystal matrix. Stucco is an inorganic binder material also known as calcined gypsum, calcium sulfate hemihydrate, calcium sulfate anhydrite or plaster of Paris. Synthetic gypsums, such as that formed as a by-product of flue gas desulfurization, are also useful. Any of the several forms of stucco are useful in the building panel of the present invention, including alpha or beta-calcined gypsum or mixtures thereof. A needle-shaped crystal of beta-stucco is formed by calcination at atmospheric pressure. Alpha-calcined stucco is produced when gypsum is calcined under pressure and is characterized by less acyclical crystals. Beta-calcined stucco requires more water than alpha-calcined stucco to make a slurry of equivalent flowability. Upon the addition of water, all forms of the stucco hydrate to form an interlocking matrix of calcium sulfate dihydrate crystals. Use of water in excess of that needed for hydration may result in loss of compressive strength due to increased size and number of interstitial voids in the crystal structure that held water between the time the gypsum set until it was fully dry. Usually, as the size and number of interstitial voids increases, the strength of the matrix decreases.

Addition of other inorganic binder components together with the stucco is contemplated for use with the present panel, including, but not limited to cement, pozzolans, gypsum and combinations thereof. In some embodiments the calcined gypsum is present in the slurry in amounts of more than 50% by weight of the total inorganic binder components.

Water is added to the stucco in sufficient amounts to make a flowable slurry. The water to stucco ratio ("WSR") is the weight of water per hundred weight dry stucco. A WSR of about 20 is the minimum amount of water needed to fully hydrate calcium sulfate hemi-hydrate. To maximize the product compressive strength, the WSR should be kept as low as practical. Some embodiments of the invention utilize a WSR from about 20 to about 100. Other embodiments have a WSR from about 40 to about 70. The amount of water required will depend on the type of calcined gypsum, the type and amount of additives used, the stucco source and the quantity of the additives that are utilized.

In addition to the stucco and water, the slurry utilized for some embodiments is made using two dispersants. Preferably the two dispersants include any dispersant and a polycondensation component. In some aspects of the invention, the dispersant is a dispersant component further described below. The slurry optionally includes additional components such as surfactants and antifoaming agents.

The method according to the present invention is characterized in that the building panel comprises:
a panel body comprising:
a calcium sulfate dihydrate matrix; and
a polycondensation component comprising:
   a first polycondensation repeating unit having a polyether side chain and one of the group consisting of an aromatic sub-unit and a heteroaromatic sub-unit;
   a second polycondensation repeating unit having a OP(OH)₂ group and one of the group consisting of an aromatic sub-unit and a heteroaromatic sub-unit; and preferably additionally a third polycondensation repeating unit having one of the group consisting of an aromatic sub-unit and a heteroaromatic sub-unit;
   wherein said second polycondensation repeating unit and said third polycondensation repeating unit differ exclusively in that the OP(OH)₂ groups of said second polycondensation repeating unit are replaced by H in said third polycondensation repeating unit, and said third polycondensation repeating unit is not the same as said first polycondensation repeating unit; and preferably additionally a dispersant component selected from the group consisting of a comb-branched polymer having polyether side chains, naphthalene sulfonate-formaldehyde condensate, melamine sulfonate-formaldehyde condensate and mixtures thereof.

One or more of the problems in connection with the production, manufacture and providing of building panels and especially gypsum boards are solved by each of the embodiments of the panel provided by the invention that includes a matrix of calcium sulfate dihydrate crystals and the polycondensate as dispersant, the polycondensation component including three repeating units.

One of the group consisting of said dispersant component, said polycondensation component or both further comprise an antifoaming component.

The said dispersant component is said comb-branched copolymer having polyether side chains and comprises:
at least one first polycarboxylate repeating unit derived from an olefinically unsaturated monocarboxylic acid comonomer or an ester or a salt thereof and an olefinically unsaturated sulfonic acid comonomer or a salt thereof; and
at least one second polycarboxylate repeating unit of the general formula (V) 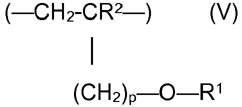
   wherein R¹ is 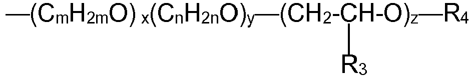 and R² is H or an aliphatic hydrocarbon radical having 1 to 5 C atoms; R³ is an unsubstituted or substituted aryl radical and R⁴ is H, an aliphatic hydrocarbon radical having 1 to 20 C atoms, a cycloaliphatic hydrocarbon radical having 5 to 8 C atoms, a substituted aryl radical having 6 to 14 C atoms, or one of the group consisting of: 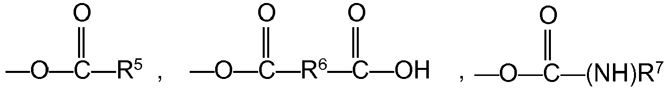
   wherein R⁵ and R⁷ each represent an alkyl, aryl, aralkyl or alkaryl radical;
   R⁶ represents an alkylidene, arylidene, aralkylidene or alkarylidene radical;
   p = 0, 1, 2, 3 or 4; m and n each, independently of one another, is 2, 3, 4 or 5;
   x and y each, independently of one another, is an integer ≤ 350; and z is from 0 to about 200; and
   wherein either the first and second polycarboxylate repeating units have no internal molecular differences or said first and second polycarboxylate repeating units have internal molecular differences with respect to at least one of said radicals R¹; R²; R³; R⁴; R⁵; R⁶; R⁷; m; n; x; y; and z, and the differences relate to the composition and length of side chains.
In a further embodiment said first polycarboxylate repeating unit is present in amounts of 30 to 99 mol% and said second polycarboxylate repeating unit is present in amounts of about 70 to about 1 mol% of the dispersant component.

The first polycondensation repeating unit of the polycondensation component is preferably represented by Formula VI: 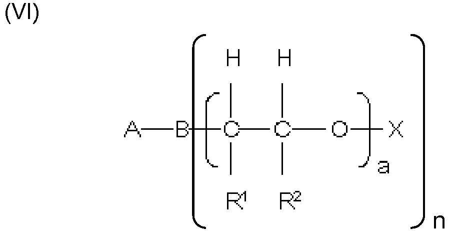
wherein A has 5 to 10 C atoms and is a substituted or unsubstituted aromatic or heteroaromatic compound; B is N, NH or O; n is 2 if B is N and n is 1 if B is NH or O; R¹ and R² each, independently of one another, is a branched or straight-chain C₁- to C₁₀-alkyl radical, C₅- to C₈-cycloalkyl radical, aryl radical, heteroaryl radical or H; a is an integer from about 1 to about 300, X is a branched or straight-chain C₁- to C₁₀-alkyl radical, C₅- to C₈-cycloalkyl radical, aryl radical, heteroaryl radical or H;
wherein said second polycondensate repeating unit of said polycondensation component is represented by Formula (VII): 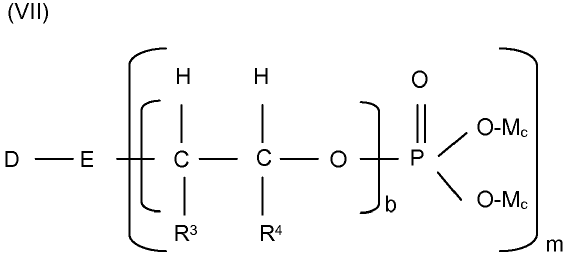
wherein said third polycondensate repeating unit of said polycondensation component is represented by Formula (VIII): 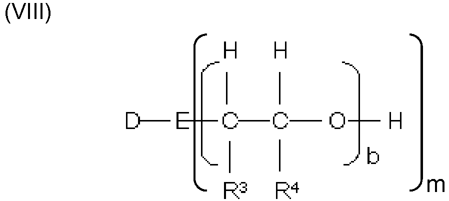
wherein in Formula (VII) and Formula (VIII) D is a substituted or unsubstituted heteroaromatic compound having 5 to 10 C atoms; E is N, NH or O; m is 2 if E is N and m is 1 if E is NH or O; R³ and R⁴ each, independently of one another, is a branched or straight-chain C₁- to C₁₀-alkyl radical, C₅- to C₈-cycloalkyl radical, aryl radical, heteroaryl radical or H; b is an integer from 0 to 300; M is an alkaline metal ion, alkaline earth metal ion, ammonium ion, organic ammonium ion and/or H, and c is ½ if M is an alkaline earth metal ion, or else c is 1; and wherein A, B, R¹, R², a, X, D, E, R³, R⁴, b, and M are each, independently of one another, identical or different among said individual first polycondensate repeating units.

A method of making the gypsum panel includes combining stucco, water and a first dosage of a first dispersant to form a slurry, the first. A second dosage of a second dispersant is added to the slurry. Properties of the gypsum slurry are tested and it is formed into a product. The product sets and properties of the product are identified. The first dosage or the second dosage is changed based on the properties of the slurry or product.

A preferred embodiment of the present invention comprises said panel body as a rectangular, having a preferred thickness up to about 2 inches (50 mm) .

The claimed panel body further comprises one or more facing materials on one or more surfaces of said panel body. Furthermore, the panel comprises an additive selected from the group consisting of a set accelerator, a set retarder, an anti-sag agent, a bonding agent, a dedusting agent, a foaming agent, a reinforcing material, a biocide and combinations thereof, whereby said calcium sulfate dihydrate matrix comprises at least 50% by weight of all inorganic binder components in said panel body.

For preparing a building panel and more preferably a gypsum board the present invention includes a method comprising:
combining calcium sulfate hemihydrate, water, the polycondensation component to form a slurry;
depositing the slurry onto a conveyor;
forming the slurry into a panel; and
allowing the calcium sulfate hemihydrate to hydrate and form a calcium sulfate dihydrate matrix., and preferably in an additional step adding a foaming agent to the slurry, wherein the foaming agent is in the form of a foam.

In slurries additionally including foam to produce foam voids in the panel products, surprisingly, it has been found that the choice of some of the polycondensate dispersant allows for better control of the foam void structure in gypsum panel products. Some of the dispersant component have minimal effect on the size and distribution of the foam voids left behind by the foam added to the gypsum slurry, while other polycondensate components produce a noticeable effect. This effect is caused by the additives' effects upon the stability of the foam. The ability to choose the dispersant types and proportions to achieve a desired degree of foam stability would provide another means of engineering an appropriate foam void structure to provide desired balance of strength and density to the gypsum panel product.

In embodiments of the invention that employ a foaming agent to yield foam voids in the set gypsum-containing product to provide lighter weight, any of the conventional foaming agents known to be useful in preparing foamed set gypsum products can be employed. Many such foaming agents are well known and readily available commercially, e.g. the HYONIC line of soap products from GEO Specialty Chemicals, Ambler, PA. Any foaming agents are useful alone or in combination with other foaming agents. Generally, soaps do not affect hydration speed or fluidity directly. However, soap addition can reduce fluidity when small bubbles are produced that tightly pack together and resist flow.

An example of a combination includes a first foaming agent which forms a stable foam and a second foaming agent which forms an unstable foam. The first foaming agent is optionally a standard board soap with an alkyl chain length of 8-12 carbon atoms and an ethoxy group chain length of 1-4 units. The second foaming agent is optionally an unethoxylated soap with an alkyl chain length of 6-16 carbon atoms. Regulating the respective amounts of these two soaps allows for control of the panel foam void structure until 100% stable soap or 100% unstable soap is reached. Foams and a preferred method for preparing foamed gypsum products are disclosed in U.S. Patent No. 5,643,510.

If foam is added to the product, the polycarboxylate dispersant is optionally divided between the gauging water and the foam water or two different dispersants are used in the gauging water and the foam water prior to its addition to the calcium sulfate hemihydrate. This method is disclosed in co-pending application U.S. Serial No. 11/152,404, entitled, "Effective Use of Dispersants in Wallboard Containing Foam". Optionally, the gypsum slurry used for the panel and/or the panel itself also includes a defoaming component to have a further effect on achieving the desired balance. The defoaming component is present either as a free compound in solution or as a moiety on the dispersant component or the polycondensation component.

According to the present invention the claimed method further includs an additive selected from the group consisting of a set accelerator, a set retarder, an anti-sag agent, a bonding agent, a dedusting agent, a foaming agent, a reinforcing material, a biocide and combinations thereof in the slurry.

A further alternative method of making a gypsum product under the present invention comprises:
combining calcium sulfate hemihydrate, water and a first dosage of a first polycondensate dispersing compound;
if necessary adding a second dosage of a second dispersant;
testing properties of the gypsum slurry;
forming the slurry into a product;
allowing the product to set;
identifying properties of the product;
changing the first dosage of the first dispersant or the second dosage of the second dispersant to vary the ratio of the first dispersant to the second dispersant based on the properties of said identifying and said testing steps.

The first dispersant comprises: a first polycondensate repeating unit having a polyether side chain and one of the group consisting of an aromatic sub-unit and a heteroaromatic sub-unit; a second polycondensate repeating unit having a OP(OH)₂ group and one of the group consisting of an aromatic sub-unit and a heteroaromatic sub-unit; and a third polycondensate repeating unit having one of the group consisting of an aromatic sub-unit and a heteroaromatic sub-unit; wherein the second polycondensate repeating unit and the third polycondensate repeating unit differ exclusively in that the OP(OH)₂ groups of the second polycondensate repeating unit is replaced by H in the third polycondensate repeating unit, and the third polycondensate repeating unit is not the same as the first polycondensate repeating unit. The second dispersant comprises:
compositions having dispersing properties and being selected from the group consisting of a comb-branched polymer having polyether side chains, naphthalene sulphonate-formaldehyde condensate, melamine sulphonate-formaldehyde condensate and mixtures thereof. Again, also this alternate method further comprises the incorporation of a foaming agent into the gypsum slurry.

Said combining step shall preferably take place in a mixer and further comprises mixing one of the first dispersant, the second dispersant and combinations thereof with the water prior to entry into the mixer. As one advantageous aspect has been identified the blending of the gypsum slurry with a gypsum additive selected from the group consisting of a set retarder, a set accelerator, an anti-sag agent, a starch, a biocide, a bonding agent, a foaming agent, a reinforcing material, a dedusting agent and mixtures thereof.

Other potential additives to the wallboard are biocides to reduce growth of mold, mildew or fungi. Depending on the biocide selected and the intended use for the wallboard, the biocide can be added to the covering, the gypsum core or both. Examples of biocides include boric acid, pyrithione salts and copper salts. When used, biocides are used in the coverings in amounts of less than 500 ppm. Use of pryithione salts in gypsum panels are disclosed in U.S. Patent No. 6,893,752.

In addition, the gypsum composition optionally can include a starch, such as a pregelatinized starch or an acid-modified starch. The inclusion of the pregelatinized starch increases the strength of the set and dried gypsum cast and minimizes or avoids the risk of paper delamination under conditions of increased moisture (e.g., with regard to elevated ratios of water to calcined gypsum). One of ordinary skill in the art will appreciate methods of pregelatinizing raw starch, such as, for example, cooking raw starch in water at temperatures of at least about 185°F (85°C) or other methods. Suitable examples of pregelatinized starch include, but are not limited to, PCF 1000 starch, commercially available from Lauhoff Grain Company and AMERIKOR 818 and HQM PREGEL starches, both commercially available from Archer Daniels Midland Company. If included, the pregelatinized starch is present in any suitable amount. For example, if included, the pregelatinized starch can be added to the mixture used to form the set gypsum composition such that it is present in an amount of from about 0.5% to about 10% percent by weight of the set gypsum composition. Pregelatinized starches such as USG95 (United States Gypsum Company, Chicago, IL) are also optionally added for core strength.

At least one of the first additive blend and the second additive blend should preferably further comprise an antifoaming component.

A trimetaphosphate compound is added to the gypsum slurry in some embodiments to enhance the strength of the product and to improve sag resistance of the set gypsum. Preferably the concentration of the trimetaphosphate compound is from about 0.07% to about 2.0% based on the weight of the calcined gypsum. Gypsum compositions including trimetaphosphate compounds are disclosed in U.S. Patent No. 6,342,284 and 6,632,550. Exemplary trimetaphosphate salts include sodium, potassium or lithium salts of trimetaphosphate, such as those available from Astaris, LLC., St. Louis, MO. Care must be exercised when using trimetaphosphate with lime or other modifiers that raise the pH of the slurry. Above a pH of about 9.5, the trimetaphosphate loses its ability to strengthen the product and the slurry becomes severely retardive.

The method of adjusting the relative amounts of two dispersants relative to each other adds another degree of freedom in the process control. Properties such as the slurry fluidity, the hydration speed and the foam bubble size are affected by a number of additives. Balancing amounts of set accelerator, dispersant, foaming agent, antifoaming agent and the like makes it difficult to achieve the desired properties. Selection of dispersants that promote different effects in the properties provides a way of achieving the desired hydration rate, bubble size distribution and fluidity.

In operation, the calcined gypsum is moved on a conveyor toward a mixer. Prior to entry into the mixer, dry additives, such as dry set accelerators, are added to the powdered calcined gypsum. Some additives are added directly to the mixer via a separate line. Trimetaphosphate is optionally added using this method. Other additives are optionally added directly to the mixing or gauging water. This is particularly convenient where the additives are supplied in liquid form. For most additives, there is no criticality regarding placing the additives in the slurry, and they may be added using whatever equipment or method is convenient. When using some polycarboxylate dispersants, it is important to add the dispersant to the water prior to addition of the stucco.

The ingredients are mixed in a high sheer mixer, such as a pin mixer, until a homogeneous slurry is obtained. Some panels have no foam added. In some embodiments, a foaming agent is added to the mixer and foam is generated in situ during mixing. In other embodiments, slurry is discharged into a chute where, optionally, pregenerated foam is added to the slurry. Foam is optionally added to the slurry by allowing it to flow over a foam ring having multiple foam outlets. This technique for foam addition is discussed in U.S. Patent No. 5,683,635. After or during foam addition, the slurry travels down the chute where it is discharged as continuously onto a conveyor.

At or near the conveyor, a sample of the slurry is periodically taken to test the properties of the slurry and the set gypsum. A slump test is performed to determine the fluidity of the slurry. The temperature rise setting time is determined in accordance with CSA A82.2OM 1977 Physical Testing of Gypsum Plasters, Section 5.3. Since hydration of calcined gypsum is an exothermic reaction, the temperature rise in the slurry from the initial mixing temperature is indicative of the degree of set in the slurry.

Optionally, the conveyor is lined with a facing material onto which the slurry is deposited. Common facing materials include, but are not limited to paper or cardboard having one or multiple plies, fiberglass mats, scrims and plastic films. A second facing material optionally covers the slurry after it has been deposited to form a "sandwich" of the slurry between the two facing materials. The first facing material can be the same or different from the second facing material. Finished panels may include none, one or two facing materials. In some embodiments, a separate edge wrap material is placed on the edge facings of the panel between the slurry and the facing material. Where no facing material is used, the slurry is deposited directly onto the conveyor surface.

After the slurry and any optional facing materials are in place on the conveyor, it is formed into a panel. The term "panel" is intended to refer to a piece of material having a thickness that is smaller than either the length or the width. The slurry mass passes under a screed bar at a forming station to spread the slurry evenly over the surface, to flatten the slurry and to make a continuous gypsum ribbon of consistent thickness. Commonly, the screed bar is set to thicknesses of 1/2 (12mm) or 5/8 (15mm) of an inch, but thickness as small as 1/4 inch (6 mm) are known and panel thickness can exceed one inch (25mm) in thickness. Edge formers smooth the edge of the slurry mass and fold the edge of the facing material, when present, to cover the edge. When the ribbon has achieved a sufficient set strength, it is cut into lengths to form the panel. Preferably a surface of the panel is generally rectangular in shape. To speed drying of the panels, they are transferred into a kiln where they are dried at elevated temperatures.

At the knife where the panels are cut, a sample of the ribbon is taken periodically to determine the void structure of the set gypsum. The sample is cut or broken open to inspect the interior structure.

Based on the results of the production tests, adjustments are made in process parameters to improve the panel quality and/or manufacturing efficiency. If the hydration rate is not at the target value, changes in process variables such as, the amount of set accelerator or the amount of the polycondensate product component are useful. Fluidity of the slurry is affected by at least the amount of set accelerator, the amount of the polycondensate product component as dispersant component. When correction in the foam structure is required, adjustments can be made to the amount of the polycondensate product component, the amount of soap, the ratio of unstable to stable soap and the amount of antifoaming agents used in the slurry.

Adjusting the relative amounts of the polycondensate component is useful in controlling one or more properties of the gypsum slurry or the resulting gypsum panel. Examples of dispersant types that could be used include the polycondensate component described herein, and additionally to that formaldehyde condensates such as BNS and MFS dispersants.

To be most effective, the dispersants should affect the efficacy, fluidity and bubble structure of the gypsum slurry differently. This is not to say that one dispersant need affect a given property in the opposite way as the other dispersant. One dispersant may have no effect on a property. However, the dispersants are selected to have effects of different magnitude with respect to the properties of interest. For example, some polycarboxylate ether dispersants strongly increase the fluidity of the slurry and tend to stabilize the bubbles. Naphthalene sulfonate dispersants increase fluidity to a lessor extent than the polycarboxylate but tend to destabilize the bubbles. These two dispersants would be suitable for use in this process. Two dispersants that would not be suitable for use together would be those that have the same effect on each property being considered. In this case, changing the ratio of the dispersants would not result in a change in the process conditions.

The following examples underline the advantages of the claimed slurry, its comprised components and its use.

### Examples

### 1. Preparation of comb branched polycondensates

### Example 1.1

A reactor equipped with a stirrer and a heating mantle is filled with 580 parts of poly(ethyleneoxide) monophenylether (average molecular weight 5000 g/mol), 33,5 parts of concentrated sulfuric acid, 14 parts of water, 110 parts of oligoethyleneglycol monophenylether-phosphoric acid ester (average molecular weight 324 g/mol) and 64.1 parts of formaldehyde. This reaction mixture is stirred at 115°C for 6h. After cooling, 650 parts of water are added the reaction mixture is neutralized with 50% sodium hydroxide solution to a pH value of 6.5 to 7.

### Example 1.2

A reactor equipped with a stirrer and a heating mantle is filled with 600 parts of poly(ethyleneoxide)monophenylether (average molecular weight 5000 g/mol), 46 parts of concentrated methane sulfonic acid, 20 parts of water, 105 parts of phenoxyethanolphosphate and 13,2 parts of paraformaldehyde. This reaction mixture is stirred at 115°C for 3,5h. After cooling, 550 parts of water are added the reaction mixture is neutralized with 50% sodium hydroxide solution to a pH value of 6.5 to 7.

### Example 1.3

A reactor equipped with a stirrer and a heating mantle is filled with 400 parts of poly(ethyleneoxide) monophenylether (average molecular weight 2000 g/mol), 34,3 parts of methane sulfonic acid (70%), 87,3 parts of 2-phenoxyethanolphosphate and 19,9 parts of paraformaldehyde. This reaction mixture is stirred at 115°C for 2,5h. After cooling, 450 parts of water are added the reaction mixture is neutralized with 50% sodium hydroxide solution to a pH value of 6.5 to 7.

### Example 1.4

A reactor equipped with a stirrer and a heating mantle is filled with 300 parts of poly(ethyleneoxide) monophenylether (average molecular weight 5000 g/mol), 280 parts of poly(ethyleneoxide) monophenylether (average molecular weight 2000 g/mol), 39,2 parts of conc. methane sulfonic acid, 17 parts of water, 152,7 parts 2-phenoxyethanolephosphate and 29,7 parts of paraformaldehyde. This reaction mixture is stirred at 120°C for 3,5h. After cooling, 550 parts of water are added the reaction mixture is neutralized with 50% sodium hydroxide solution to a pH value of 6.5 to 7.

### 2. Application tests

The following dispersants have been used as comparison: the polycarboxylatether Melflux PCE 239 L/35% N.D. (PCE 239), Melflux PCE 541 L/44% F.F. (PCE 541) and Melflux PCE 4930 L/42% (PCE 4930) and the naphthaline sulfonate condensate Melcret 500 L (BNS), all of BASF Construction Polymers GmbH, Germany.

Flow Tests with Calciumsulfate-Hemihydrate (beta)
The required amount of liquid admixture was weighted into the mixing cup and water was added to reach the water to stucco ratios given in the Tables 2 - 5. The stucco (400 g from various natural sources) together with the accelerator was sifted into water within 15 sec and afterwards mixed with a Hobart® mixer for 15 sec at high speed (285 rpm). After 60 sec the flow value was measured with a cylinder (height: 10 cm, diameter: 5 cm). The set time was determined by means of the so-called knife cut test and adjusted by changing the amount of the accelerator.
The clay containing natural stucco types A, B, C, D and E had following mineralogical compositions:

**Table 1 Mineralogical composition of the natural stuccos with varying amounts of swellable clays**

| | Stucco A | Stucco B | Stucco C | Stucco D | Stucco E |
|---|---|---|---|---|---|
| Hemihydrate | 85.3 % | 87.5 % | 78.9 % | 82.5 % | 91.1 % |
| Anhydrite | 0.9 % | - | - | 12.4 % | 4.1 % |
| Dihydrate | - | 0.5 % | - | 0.8 % | - |
| Calcite | 1.5 % | 5.9 % | - | 0.1 % | 0.4 % |
| Dolomite | 0.8 % | - | 8.9 % | - | - |
| Muscovite | 4.6 % | - | 1.6 % | 0.7 % | 0.5 % |
| Smectite (a 3 layered clay mineral), | - | 3.4 % | - | - | 2.1 % |
| Chlorite (a 4 layered clay mineral) | 2.6 % | - | 4.2 % | 0.8 % | 0.1 % |
| Quartz | 3.4 % | - | 1.4 % | 0.7 % | 0.7 % |
| others | 0.9 % | 2.7 % | 5.0 % | 2.0 % | 1.0 % |

As can be seen from Tables 2 and 3, the polycondensates according to the invention have a significantly improved dispersing effect in clay containing stuccos compared to naphthalene sulfonates and the superdispersant PCE. Having an identical flow the polycondensates according to the invention show a significant lower dosage compared to the polyether based PCEs. Additionally, the polycondensates according to the invention show no negative influence on the setting time of the gypsum.

**Table 2 Dispersing effect and retardation of the comparison examples and one polycondensate of the invention in the clay containing natural gypsum A (beta-hemihydrate)**

| Example | Dosage [Weight-%] | Water-Stucco-Ratio | Accelerator [g])* ) | Flow [cm] | Setting Time [min:s] |
|---|---|---|---|---|---|
| BNS | 0,460 | 0,67 | 0,220 | 20,2 | 2:15 |
| PCE 239 | 0,250 | 0,67 | 0,350 | 11,0 | 2:00 |
| Example 1.1)⁺ | 0,250 | 0,67 | 0,320 | 19,6 | 2:20 |

| | | | | | |
|---|---|---|---|---|---|
| )* finely ground CaSO₄-Dihydrate )⁺ according to the invention | | | | | |

**Table 3 Dispersing effect of the comparison examples and the polycondensates of the invention in the clay containing natural gypsum B (beta-hemihydrate) at two different water-to-stucco ratios**

| Example | Dosage [Weight-%] | Water-Stucco-ratio | Accelerator [g])* ) | Flow [cm] | Setting Time [min:s] |
|---|---|---|---|---|---|
| BNS | 0,200 | 0,67 | 0,110 | 20,2 | 2:20 |
| PCE 4930 | 0,210 | 0,67 | 0,100 | 20,3 | 2:20 |
| Example 1.2)⁺ | 0,130 | 0,67 | 0,076 | 20,4 | 2:20 |
| BNS | 0,500 | 0,57 | 0,110 | 15,4 | 2:20 |
| PCE 4930 | 0,440 | 0,57 | 0,350 | 20,8 | 2:00 |
| Example 1.2)⁺ | 0,270 | 0,57 | 0,057 | 20,3 | 2:20 |

| | | | | | |
|---|---|---|---|---|---|
| )* finely ground CaSO₄-Dihydrate )⁺ according to the invention | | | | | |

The results of Table 4 show, that the polycondensates according to the invention have a much higher dispersing effect of the high clay containing stucco than the PCE. Additionally, the structurally different polycondensates according to the invention show a good to excellent dispersing performance.

**Table 4 Dispersing effect of the comparison examples and the structurally different polycondensates of the invention in the high clay containing natural gypsum C (beta-hemihydrate)**

| Example | Dosage [weight-%] | Water-Stucco-Ratio | Accelerator [g])* | Flow [cm] | Setting Time [min:s] |
|---|---|---|---|---|---|
| PCE 239 | 0,280 | 0,60 | | No flow | |
| Example 1.2)⁺ | 0,280 | 0,60 | 0,23 | 21,0 | 2:10 |
| Example 1.3)⁺ | 0,280 | 0,60 | 0,23 | 20,6 | 2:10 |
| Example 1.4)⁺ | 0,280 | 0,60 | 0,23 | 18,9 | 2:05 |

| | | | | | |
|---|---|---|---|---|---|
| )* finely ground CaSO₄-Dihydrate )⁺ according to the invention | | | | | |

Even in the low clay containing stucco E the polycondensate according to the invention displays a much lower dosage than the PCE (Table 5). Also blends of the polycondensate and the PCE posses lower overall dosages than the PCE as sole dispersant.

**Table 5 Dispersing effect and retardation of the comparison example and blends of the polycondensate 1.2 with the PCE 4930 in the low clay containing natural gypsum D (beta-hemihydrate)**

| Example | Example dosage [wt.-%] | PCE | PCE dosage [wt.-%] | Water-Stucco-Ratio | Accelerator [g])* ) | Flow [cm] | Setting Time [min:s] |
|---|---|---|---|---|---|---|---|
| Example 1.2)⁺ | 0,098 | - | 0 | 0,59 | 0,20 | 20,7 | 2:20 |
| Example 1.2 | 0,075 | PCE 4930 | 0,018 | 0,59 | 0,24 | 21,0 | 2:10 |
| Example 1.2 | 0,050 | PCE 4930 | 0,045 | 0,59 | 0,24 | 20,9 | 2:20 |
| Example 1.2 | 0,025 | PCE 4930 | 0,090 | 0,59 | 0,25 | 21,1 | 2:20 |
| - | 0 | PCE 4930 | 0,145 | 0,59 | 0,39 | 21,0 | 2:15 |

| | | | | | | | |
|---|---|---|---|---|---|---|---|
| )* finely ground CaSO₄-Dihydrate )⁺ according to the invention | | | | | | | |

### Gypsum flow test - foamed system

This application test was done as described in US2011054053 by adding prefabricated foam to the gypsum slurry. The listed water to stucco ratios were calculated from the sum of the gauging water, the water from the additives and the water from the prefabricated foam. The dosage of the additives shown in Table 6 was measured as weight of the components solids based on the weight of the dry stucco.

**Table 6 Dispersing effect and retardation of the comparison examples and the polycondensates of the invention in the clay containing natural gypsum E (beta-hemihydrate)**

| | BNS | PCE 541 | Example 1.2 |
|---|---|---|---|
| Dosage [wt-%] | 0.110 | 0.115 | 0.055 |
| Water to stucco ratio | 0.74 | 0.74 | 0.74 |
| Accelerator [g] | 0.500 | 0.550 | 0.350 |
| Flow [cm] | 18.2 | 18.3 | 17.8 |
| Set time [min:s] | 2:10 | 2:10 | 2:15 |
| Cup weight [g] | 284.1 | 287.9 | 293.8 |
| Soap [25AS:PFM33] | 50:50 | 60:40 | 60:40 |
| Foam time [s] | 17 | 15 | 15 |

As can be readily seen from the above data, the condensate according to the invention shows improved fluidity compared to the references BNS and PCE. By using the polycarboxylatether PCE 541 no improvement in dosage can be achieved compared to the state of the art fluidizer BNS whereas the polycondensate according to the invention outperforms BNS.

### Gypsum based flow screed

**Guide recipe:**

| | |
|---|---|
| CaSO₄ (Raddibin CAB 30) | 340 g |
| Standard sand (0 - 2 mm) | 550 g |
| Filler | 100 g |
| CEM I 42.5R (Karlstadt) | 10 g |
| Tylose MH2000 YP2 | 0.25 g |
| Defoamer DF 9010 | 0.2 g |
| Water | 175 g |

### Mixing Procedure and Measurement:

Mixing was done according to DIN EN 13454-2 with a Hobart® mixer at low speed (level I). The slump value was measured with a Vicat ring after 3 min, 15 min and 30 min. The comparison example PCE Melflux 2651F (PCE 2651) from BASF Construction Polymers GmbH, Germany was added to the dry solids whereas the polycondensate according to Example 1.2 was added to the mixing water (the water from the polycondensate was subtracted from the mixing water).

**Table 7**

| | A 1.1 | A 1.2 | B 1.1 | B 1.2 |
|---|---|---|---|---|
| Filler | Limestone filler (Omyacarb BG20) | | Clay containing limestone filler)* | |
| Plasticizer | PCE 2651 | Example 1.2)⁺ | PEC 2651 | Example 1.2)⁺ |
| Dosage [g solids] | 0.30 | 0.30 | 0.40 | 0.40 |
| Slump at 3 min | 24.0 cm | 23.7 cm | 19.1 cm | 22.2 cm |
| at 15 min | 23.9 cm | 23.9 cm | 17.9 cm | 21.3 cm |
| at 30 min | 23.5 cm | 23.5 cm | 16.2 cm | 19.3 cm |
| Consistency | fluid | fluid | viscous | Slightly viscous |

| | | | | |
|---|---|---|---|---|
| )* Calcite 91.8 %, Dolomite 7.1 %, 1.1% other impurities (quartz, clays) )⁺ according to the invention | | | | |

As illustrated in Table 7, the polycondensate according to the invention show a much better fluidification than the PCE 2651 with the clay containing limestone filler. While in the binder mixture with the clay free limestone filler both plasticizers displayed the same fludification, the polycondensate according the invention possessed advantageous properties in the clay containing binder mixture.

## Claims

1. Gypsum-Slurry containing a compound with dispersing properties, **characterized in that** the slurry contains as dispersant a phosphate based polycondensation product as the sole agent with dispersing properties as an aqueous solution and in an amount of 0,01 to 0,5% by weight-% based on the gypsum content, the polycondensation product containing
(I) at least one structural unit with an aromatic or heteroaromatic sub-unit and a polyether side chain and
(II) at least one phosphated structural unit with an aromatic or heteroaromatic sub-unit, and preferably additionally
(III) at least one structural unit with an aromatic or heteroaromatic sub-unit,
structural unit (II) and structural unit (III) differing exclusively **in that** the OP(OH)₂ group of the structural unit (II) is replaced by H in structural unit (III), and structural unit (III) is not the same as structural unit (I).

2. Slurry according to Claim 1, **characterized in that** the structural units (I), (II) and if applicable (III) of the polycondensation product are represented by the following formulae 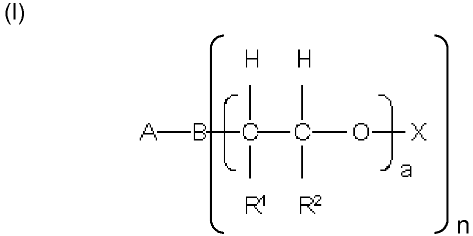
where
A are identical or different and are represented by substituted or unsubstituted aromatic or heteroaromatic compound having 5 to 10 C atoms,
where
B are identical or different and are represented by N, NH or O
where
n = 2, if B = N, and n = 1, if B = NH or O
where
R¹ and R² independently of one another, are identical or different and are represented by a branched or straight-chain C₁- to C₁₀-alkyl radical, C₅- to C₈-cycloalkyl radical, aryl radical, heteroaryl radical or H,
where
a are identical or different and are represented by an integer from 1 to 300,
where X
are identical or different and are represented by a branched or straight-chain C₁₋ to C₁₀-alkyl radical, C₅- to C₈-cycloalkyl radical, aryl radical, heteroaryl radical or H, 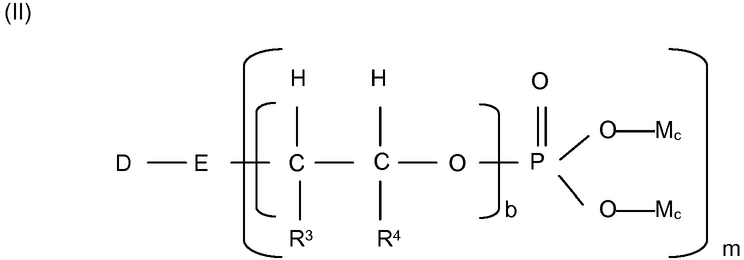 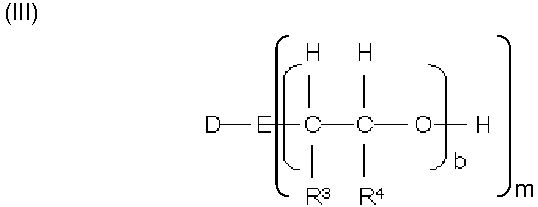
for (II) and (III) in each case:
where
D are identical or different and are represented by a substituted or unsubstituted heteroaromatic compound having 5 to 10 C atoms,
where
E are identical or different and are represented by N, NH or O
where
m = 2, if E = N, and m = 1, if E = NH or O
where
R³ and R⁴ independently of one another are identical or different and are represented by a branched or straight-chain C₁- to C₁₀-alkyl radical, C₅- to C₈-cycloalkyl radical, aryl radical, heteroaryl radical or H,
where b are identical or different and are represented by an integer from 0 to 300,
where
M is independently of one another an alkaline metal ion, alkaline earth metal ion, ammonium ion, organic ammonium ion and/or H,
c is 1 or in the case of alkaline earth metal ions ½.

3. Slurry according to either of Claims 1 and 2, **characterized in that** the polycondensation product contains a further structural unit (IV) which is represented by the following formula 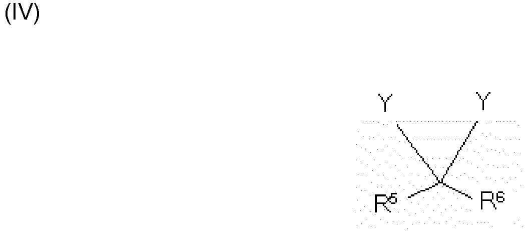
where
Y, independently of one another, are identical or different and are represented by (II), (III), (IV) or further constituents of the polycondensation product,
where
R⁵ are identical or different and are represented by H, CH₃, COOM_{c} or a substituted or unsubstituted aromatic or heteroaromatic compound having 5 to 10 C atoms,
where
R⁶ are identical or different and are represented by H, CH₃, COOM_{c} or a substituted or unsubstituted aromatic or heteroaromatic compound having 5 to 10 C atoms,
where
M is independently of one another an alkaline metal ion, alkaline earth metal ion, ammonium ion, organic ammonium ion and/or H,
c is 1 or in the case of alkaline earth metal ions ½.

4. Slurry according to Claim 3, **characterized in that** R⁵ and R⁶ in structural unit (IV) of the polycondensation product, independently of one another, are identical or different and are represented by H, COOM_{c} and/or methyl.

5. Slurry according to any of Claims 1 to 4, **characterized in that** the molar ratio of the structural units [(I) + (II) + (III)]:(IV) in the polycondensation product is 1:0.8 to 3.

6. Slurry according to any of Claims 1 to 5, **characterized in that** the molar ratio of the structural units (I):[(II) + (III)] is 1:15 to 15:1 and preferably 1:10 to 10:1.

7. Slurry according to any of Claims 1 to 6, **characterized in that** the molar ratio of the structural units (II):(III) is 1:0.005 to 1:10.

8. Slurry according to any of Claims 1 to 7, **characterized in that** the slurry contains the polycondensation product in formulated form, the formulated form containing the polycondensation product in proportions of 5 to 100% by weight, preferably of 10 to 60% by weight and particularly preferably of 15 to 40% by weight, based in each case on the total formulation.

9. Slurry according to any of Claims 1 to 8, **characterized in that** it contains the polycondensation product as the sole compound with dispersing properties.

10. Slurry according to any of Claims 1 to 7, **characterized in that** the phosphated polycondensate is present in an amount of 0,05 to 0,2 weight-% of the solid polycondensate, based on the gypsum content.

11. Slurry according to any of the Claims 8 to 10, **characterized in that** the formulation contains, in addition to the polycondensation product at least one antifoaming agent as component a) and/or a component b) having a surface-active effect, the components a) and b) being structurally different from one another.

12. Slurry according to Claim 11, **characterized in that** the antifoam component a) is at least one representative of the group consisting of mineral oil, vegetable oil, silicone oil, silicone-containing emulsions, fatty acid, fatty acid ester, organically modified polysiloxane, borate ester, alkoxylate, polyoxyalkylene copolymer, ethylene oxide (EO)-propylene oxide (PO) block polymer, acetylenic diol having antifoam properties, phosphoric acid ester of the formula P(O)(O-R₈)₃₋ₓ(O-R₉)ₓ in which P = phosphorus, O = oxygen and R₈ and R₉ independently of one another, denote a C₂₋₂₀-alkyl or an aryl group and x = 0, 1 or 2.

13. Slurry according to either of Claims 11 and 12, **characterized in that** the antifoaming component a) is at least one representative of the series consisting of trialkyl phosphate, polyoxypropylene copolymer and/or glycerol/alcohol acetate.

14. Slurry according to any of Claims 11 to 13, **characterized in that** the antifoaming component a) is triisobutyl phosphate.

15. Slurry according to any of Claims 11 to 14, **characterized in that** the antifoam component a) represents a mixture of a trialkylphosphate and a polyoxypropylene copolymer.

16. Slurry according to Claim 11, **characterized in that** the component b) is at least one representative of the series consisting of ethylene oxide/propylene oxide (EO/PO) block copolymer, styrene/maleic acid copolymer, fatty acid alcohol alkoxylate, alcohol ethoxylate R₁₀-(EO)-H where R₁₀ = an aliphatic hydrocarbon group having 1 to 25 carbon atoms, acetylenic diol, monoalkylpolyalkylene, ethoxylated nonylphenol, alkyl sulphate, alkyl ether sulphate, alkyl ether sulphonate or alkyl ether carboxylate.

17. Slurry according to either of Claims 11 and 16, **characterized in that** the component b) comprises an alcohol having a polyalkylene group, the polyalkylene group having a carbon chain length of 2 to 20 carbon atoms.

18. Slurry according to Claim 17, **characterized in that** the polyalkylene group has a carbon chain length of 3 to 12 carbon atoms.

19. Slurry according to any of Claims 11 and 17 to 18, **characterized in that** it contains the antifoaming component a) in free form.

20. Slurry according to any of Claims 11 to 19, **characterized in that** the antifoaming component a) is present in amounts of 0.01 to 10% by weight and/or the surface-active component b) is present in amounts of 0.01 to 10% by weight, based in each case on the total weight of the formulation.

21. Slurry according to any of Claims 11 to 20, **characterized in that** the antifoaming component a) and/or the surface-active component b), independently of one another, are present in each case in an amount of 0.01 to 5% by weight, based in each case on the total weight of the formulation.

22. Slurry according to any of Claims 1 to 21, **characterized in that** it contains clay.

23. Slurry according to any of Claims 1 to 22, **characterized in that** the gypsum component contains clay.

24. Slurry according to each of the Claims 22 and 23, **characterized in that** the clay is swellable and preferably water swellable and more preferably selected from the group smectite, montmorillionite, bentonite, vermiculite, hectorite, or selected from the group kaolins, feldspar und micas, or mixtures therefrom.

25. Slurry according to any of the Claims 22 to 24, **characterized in that** it contains swellable clay in amounts of ≤20 weight-%, preferably ≤15 weight-%, more preferably ≤10 weight-% and the most preferably of from 0,5 to 5 weight-%, based on the gypsum.

26. Slurry according to any of Claims 1 to 25, **characterized in that**, in addition to the polycondensation product and optionally a) and/or b), it contains at least one compound selected from the series consisting of polymer having a low charge, neutral polymer or polyvinyl alcohol as component c), preferably in formulated form, and with clay masking properties.

27. Slurry according to Claim 26, **characterized in that** it contains the component c) in amounts of 1 to 50% by weight, preferably of 5 to 40% by weight and particularly preferably in amounts of 10 to 30% by weight, based in each case on the total weight of the formulation.

28. Slurry according to either of Claims 26 and 27, **characterized in that** the polymer having a low charge is branched and the side chain preferably consists of a polyether and/or a polyester.

29. Slurry according to any of Claims 26 to 28, **characterized in that** the polymer having a low charge is a polycarboxylate ether and/or a polycarboxylate ester, preferably having EO side chains and/or having a proportion of carboxylate of up to 83 mol%, preferably up to 75 mol%.

30. Slurry according to any of Claims 26 to 29, **characterized in that** the polymer c) having a low charge is composed of at least one monomer selected from the series consisting of polyether monoacrylate, polyether monomethacrylate, polyether monoallyl ether, polyether monomaleate, monovinylated polyether or mixtures thereof.

31. Slurry according to Claim 30, **characterized in that** the polyether is an alkylene oxide polymer having a molecular weight of 500 to 10 000, preferably of 750 to 7 500 and in particular of 1 000 to 5 000.

32. Slurry according to Claim 31, **characterized in that** the alkylene oxide is ethylene oxide, propylene oxide, butylene oxide or mixtures thereof.

33. Slurry according to any of Claims 26 to 32, **characterized in that** the polymer c) having a low charge is composed of at least one monomer selected from the series consisting of polypropylene glycol acrylate, polypropylene glycol methacrylates, polyethylene glycol acrylate, polyethylene glycol methacrylate, polypropylene glycol monovinyl ether, polyethylene glycol monovinyl ether, alkoxy- or aryloxypolyethylene glycol acrylate, alkoxy- or aryloxypolyethylene glycol methacrylates, alkoxy- or aryloxypolyethylene glycol monovinyl ether, acrylates, methacrylates and monovinyl ethers of an oxyalkylene or oxypropylene block or random copolymer, polypropylene glycol allyl ether, polyethylene glycol allyl ether, polyethylene glycol monomaleate polypropylene glycol monomaleate and any mixtures thereof.

34. Slurry according to any of Claims 26 to 33, **characterized in that** the polymer c) having a low charge carries a carboxylic acid group, preferably selected from the series consisting of acrylic acid, methacryl acid, maleic acid, fumaric acid, itaconic acid or anhydrides thereof.

35. Slurry according to any of Claims 26 to 34, **characterized in that** the polymer c) having a low charge carries a sulphonic acid group selected from the series consisting of 2-acrylamido-2-methylpropanesulphonic acid (AMPS), vinylsulphonic acid, allyl ether sulphonic acid, 2-sulphoethylmethacrylic acid, styrenesulphonic acid, methallylsulphonic acid, the sodium, potassium and ammonium salts thereof and any mixtures thereof, and in particular the AMPS and vinylsulphonic acid.

36. Slurry according to any of Claims 26 to 35, **characterized in that** the neutral polymer c) is composed of neutral monomer building blocks which are selected in particular from the series consisting of alkyl acrylates and alkyl methacrylates and hydroxyalkyl esters thereof having up to 5 carbon atoms, in particular hydroxyethyl acrylate and hydroxypropyl acrylate or hydroxyethyl methacrylate and hydroxypropyl methyacrylate, and vinyl acetate, N-vinylpyrrolidone, N-vinylcaprolactam, styrene and methylstyrene.

37. Slurry according to one of the Claims 1 to 36, **characterized in that** the gypsum is selected from the group calcium sulphate, calcined gypsum, calcium sulfate hemihydrate, calcium sulfate anhydrite, plaster of Paris, or synthetic gypsums, referably formed as a by-product of flue gas desulfurization.

38. Use of the slurry according to any of the Claims 1 to 37 for providing a building panel and preferably a gypsum board, floor screeds, pastes and grouts.

39. Use according to claim 38, **characterized in that** the building panel comprises:
a panel body comprising:
a calcium sulfate dihydrate matrix; and
a polycondensation component comprising:
a first polycondensation repeating unit having a polyether side chain and one of the group consisting of an aromatic sub-unit and a heteroaromatic sub-unit;
a second polycondensation repeating unit having a OP(OH)₂ group and one of the group consisting of an aromatic sub-unit and a heteroaromatic sub-unit; and preferably additionally a third polycondensation repeating unit having one of the group consisting of an aromatic sub-unit and a heteroaromatic sub-unit;
wherein said second polycondensation repeating unit and said third polycondensation repeating unit differ exclusively **in that** the OP(OH)₂ groups of said second polycondensation repeating unit are replaced by H in said third polycondensation repeating unit, and said third polycondensation repeating unit is not the same as said first polycondensation repeating unit; and preferably additionally
a dispersant component selected from the group consisting of a comb-branched polymer having polyether side chains, naphthalene sulfonate-formaldehyde condensate, melamine sulfonate-formaldehyde condensate and mixtures thereof;

40. The use of claim 39 wherein one of the group consisting of said dispersant component, said polycondensation component or both further comprises an antifoaming component.

41. The use of claim 39 wherein said dispersant component is said comb-branched copolymer having polyether side chains and comprises:
at least one first polycarboxylate repeating unit derived from an olefinically unsaturated monocarboxylic acid comonomer or an ester or a salt thereof and an olefinically unsaturated sulfonic acid comonomer or a salt thereof; and
at least one second polycarboxylate repeating unit of the general formula (V) 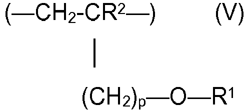
wherein R¹ is 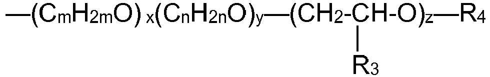
and R² is H or an aliphatic hydrocarbon radical having 1 to 5 C atoms; R³ is an unsubstituted or substituted aryl radical and R⁴ is H, an aliphatic hydrocarbon radical having 1 to 20 C atoms, a cycloaliphatic hydrocarbon radical having 5 to 8 C atoms, a substituted aryl radical having 6 to 14 C atoms, or one of the group consisting of: 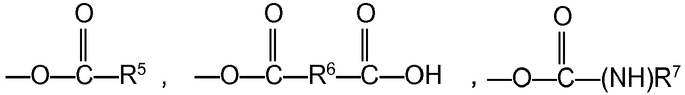
wherein R⁵ and R⁷ each represent an alkyl, aryl, aralkyl or alkaryl radical;
R⁶ represents an alkylidene, arylidene, aralkylidene or alkarylidene radical;
p = 0, 1, 2, 3 or 4; m and n each, independently of one another, is 2, 3, 4 or 5;
x and y each, independently of one another, is an integer ≤ 350; and z is from 0 to about 200; and
wherein either the first and second polycarboxylate repeating units have no internal molecular differences or said first and second polycarboxylate repeating units have internal molecular differences with respect to at least one of said radicals R¹; R²; R³; R⁴; R⁵; R⁶; R⁷; m; n; x; y; and z, and the differences relate to the composition and length of side chains.

42. The use of claim 39, wherein said first polycarboxylate repeating unit is present in amounts of 30 to 99 mol% and said second polycarboxylate repeating unit is present in amounts of about 70 to about 1 mol% of the dispersant component.

43. The use of claim 39, wherein said first polycondensation repeating unit of the polycondensation component is represented by Formula VI: 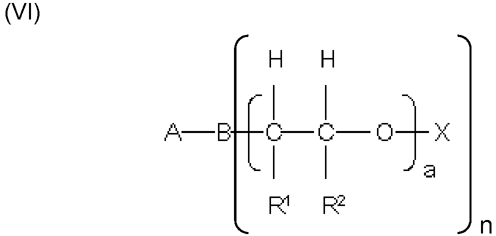
wherein A has 5 to 10 C atoms and is a substituted or unsubstituted aromatic or heteroaromatic compound; B is N, NH or O; n is 2 if B is N and n is 1 if B is NH or O; R¹ and R² each, independently of one another, is a branched or straight-chain C₁- to C₁₀-alkyl radical, C₅- to C₈-cycloalkyl radical, aryl radical, heteroaryl radical or H; a is an integer from about 1 to about 300, X is a branched or straight-chain C₁- to C₁₀-alkyl radical, C₅- to C₈-cycloalkyl radical, aryl radical, heteroaryl radical or H;
wherein said second polycondensate repeating unit of said polycondensation component is represented by Formula (VII): 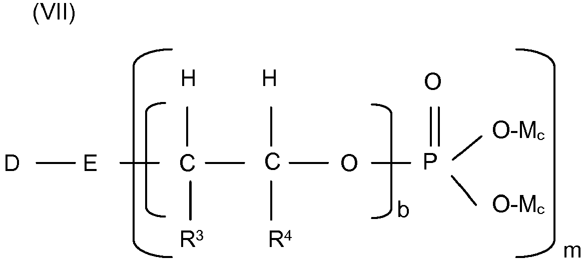
wherein said third polycondensate repeating unit of said polycondensation component is represented by Formula (VIII): 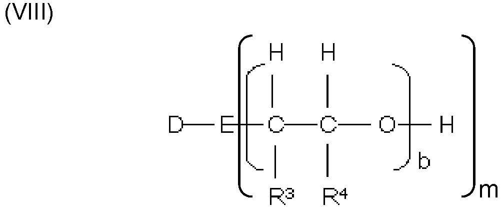
wherein in Formula (VII) and Formula (VIII) D is a substituted or unsubstituted heteroaromatic compound having 5 to 10 C atoms; E is N, NH or O; m is 2 if E is N and m is 1 if E is NH or O; R³ and R⁴ each, independently of one another, is a branched or straight-chain C₁- to C₁₀-alkyl radical, C₅- to C₈-cycloalkyl radical, aryl radical, heteroaryl radical or H; b is an integer from 0 to 300; M is an alkaline metal ion, alkaline earth metal ion, ammonium ion, organic ammonium ion and/or H, and c is ½ if M is an alkaline earth metal ion, or else c is 1; and wherein A, B, R¹, R², a, X, D, E, R³, R⁴, b, and M are each, independently of one another, identical or different among said individual first polycondensate repeating units.

44. The use of claim 39 wherein said panel body is rectangular and up to about 2 inches (50 mm) in thickness.

45. The use of claim 39 wherein said panel body further comprising one or more facing materials on one or more surfaces of said panel body.

46. The use of claim 39 wherein the panel further comprising an additive selected from the group consisting of a set accelerator, a set retarder, an anti-sag agent, a bonding agent, a dedusting agent, a foaming agent, a reinforcing material, a biocide and combinations thereof.

47. The use of claim 39 wherein said calcium sulfate dihydrate matrix comprises at least 50% by weight of all inorganic binder components in said panel body.

48. The use of claim 39 comprising:
combining calcium sulfate hemihydrate, water, the polycondensation component to form a slurry;
depositing the slurry onto a conveyor;
forming the slurry into a panel; and
allowing the calcium sulfate hemihydrate to hydrate and form a calcium sulfate dihydrate matrix.

49. The use of claim 48 further comprising adding a foaming agent to the slurry.

50. The use of claim 49 wherein the foaming agent is in the form of a foam.

51. The use of claim 48 further comprising including an additive selected from the group consisting of a set accelerator, a set retarder, an anti-sag agent, a bonding agent, a dedusting agent, a foaming agent, a reinforcing material, a biocide and combinations thereof in the slurry.

52. A method of making a gypsum product according to claim 1 comprising:
combining calcium sulfate hemihydrate, water and a first dosage of a first polycondensate dispersing compound;
if necessary adding a second dosage of a second dispersant;
testing properties of the gypsum slurry;
forming the slurry into a product;
allowing the product to set;
identifying properties of the product;
changing the first dosage of the first dispersant or the second dosage of the second dispersant to vary the ratio of the first dispersant to the second dispersant based on the properties of said identifying and said testing steps.

53. The method of claim 52 wherein the first dispersant comprises:
a first polycondensate repeating unit having a polyether side chain and one of the group consisting of an aromatic sub-unit and a heteroaromatic sub-unit;
a second polycondensate repeating unit having a OP(OH)₂ group and one of the group consisting of an aromatic sub-unit and a heteroaromatic sub-unit; and
a third polycondensate repeating unit having one of the group consisting of an aromatic sub-unit and a heteroaromatic sub-unit;
wherein the second polycondensate repeating unit and the third polycondensate repeating unit differ exclusively in that the OP(OH)₂ groups of the second polycondensate repeating unit is replaced by H in the third polycondensate repeating unit, and the third polycondensate repeating unit is not the same as the first polycondensate repeating unit.

54. The method of claim 52 wherein the second dispersant comprises: compositions having dispersing properties and being selected from the group consisting of a comb-branched polymer having polyether side chains, naphthalene sulphonate-formaldehyde condensate, melamine sulphonate-formaldehyde condensate and mixtures thereof.

55. The method of claim 52 further comprising incorporating a foaming agent into the gypsum slurry.

56. The method of claim 52 wherein said combining step takes place in a mixer and wherein said combining step further comprises mixing one of the first dispersant, the second dispersant and combinations thereof with the water prior to entry into the mixer.

57. The method of claim 52 further comprising blending the gypsum slurry with a gypsum additive selected from the group consisting of a set retarder, a set accelerator, an anti-sag agent, a starch, a biocide, a bonding agent, a foaming agent, a reinforcing material, a dedusting agent and mixtures thereof.

58. The method of claim 52 wherein at least one of the first additive blend and the second additive blend further comprises an antifoaming component.

## Patentansprüche

1. Gipsaufschlämmung, enthaltend eine Verbindung mit Dispergiereigenschaften, **dadurch gekennzeichnet, dass** die Aufschlämmung als Dispergiermittel ein auf Phosphat basierendes Polykondensationsprodukt als einziges Mittel mit Dispergiereigenschaften als wässrige Lösung und in einer Menge von 0,01 bis 0,5 Gew.-%, bezogen auf den Gipsgehalt, enthält, wobei das Polykondensationsprodukt Folgendes enthält:
(I) mindestens eine Struktureinheit mit einer aromatischen oder heteroaromatischen Untereinheit und einer Polyetherseitenkette und
(II) mindestens eine phosphatierte Struktureinheit mit einer aromatischen oder heteroaromatischen Untereinheit und vorzugsweise zusätzlich
(III) mindestens eine Struktureinheit mit einer aromatischen oder heteroaromatischen Untereinheit,
wobei Struktureinheit (II) und Struktureinheit (III) sich ausschließlich dadurch unterscheiden, dass die OP(OH)₂-Gruppe der Struktureinheit (II) bei Struktureinheit (III) durch H ersetzt ist, und Struktureinheit (II) nicht mit Struktureinheit (I) identisch ist.

2. Aufschlämmung nach Anspruch 1, **dadurch gekennzeichnet, dass** die Struktureinheiten (I), (II) und gegebenenfalls (III) des Polykondensationsprodukts durch die folgenden Formeln wiedergegeben werden: 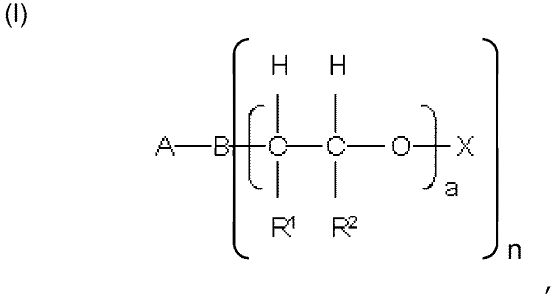 wobei
die Variablen A gleich oder voneinander verschieden sind und für eine substituierte oder unsubstituierte aromatische oder heteroaromatische Verbindung mit 5 bis 10 C-Atomen stehen,
wobei
die Variablen B gleich oder voneinander verschieden sind und für N, NH oder O stehen,
wobei
n = 2, wenn B = N, und n = 1, wenn B = NH oder O,
wobei
R¹ und R² unabhängig voneinander gleich oder voneinander verschieden sind und für einen verzweigten oder geradkettigen C₁- bis C₁₀-Alkylrest, C₅- bis C₈-Cycloalkylrest, Arylrest, Heteroarylrest oder H stehen,
wobei
die Variablen a gleich oder voneinander verschieden sind und für ganze Zahl von 1 bis 300 stehen,
wobei die Variablen X
unabhängig voneinander gleich oder voneinander verschieden sind und für einen verzweigten oder geradkettigen C₁- bis C₁₀-Alkylrest, C₅- bis C₈-Cycloalkylrest, Arylrest, Heteroarylrest oder H stehen, 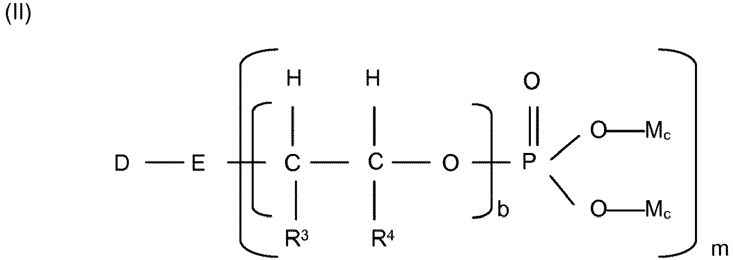 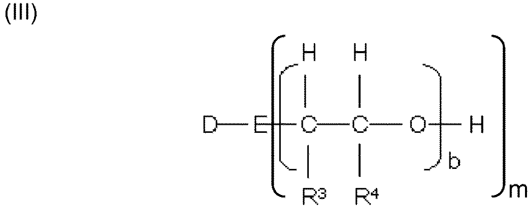
wobei für (II) und (III) jeweils gilt:
wobei
die Variablen D gleich oder voneinander verschieden sind und für eine substituierte oder unsubstituierte heteroaromatische Verbindung mit 5 bis 10 C-Atomen stehen,
wobei
die Variablen E gleich oder voneinander verschieden sind und für N, NH oder O stehen,
m = 2, wenn E = N, und m = 1, wenn E = NH oder O,
wobei
R³ und R⁴ unabhängig voneinander gleich oder voneinander verschieden sind und für einen verzweigten oder geradkettigen C₁- bis C₁₀-Alkylrest, C₅- bis C₈-Cycloalkylrest, Arylrest, Heteroarylrest oder H stehen,
wobei die Variablen b gleich oder voneinander verschieden sind und für ganze Zahl von 0 bis 300 stehen,
wobei
M unabhängig voneinander für ein Alkalimetallion, Erdalkalimetallion, Ammoniumion, organisches Ammoniumion und/oder H steht,
c 1 oder im Fall von Erdalkalimetallionen ½ ist.

3. Aufschlämmung nach einem der Ansprüche 1 und 2, **dadurch gekennzeichnet, dass** das Polykondensationsprodukt eine weitere Struktureinheit (IV) enthält, die durch die folgende Formel wiedergegeben wird: 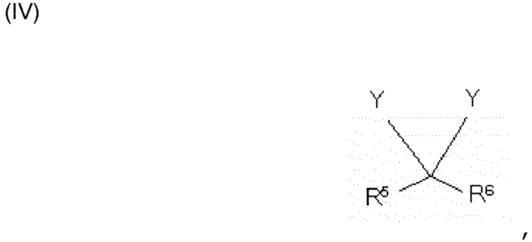
wobei
die Variablen Y unabhängig voneinander gleich oder voneinander verschieden sind und für (II), (III), (IV) oder weitere Bestandteile des Polykondensationsprodukts stehen,
wobei
die Variablen R⁵ gleich oder voneinander verschieden sind und für H, CH₃, COOM_{c} oder eine substituierte oder unsubstituierte, aromatische oder heteroaromatische Verbindung mit 5 bis 10 C-Atomen stehen,
wobei
die Variablen R⁶ gleich oder voneinander verschieden sind und für H, CH₃, COOM_{c} oder eine substituierte oder unsubstituierte aromatische oder heteroaromatische Verbindung mit 5 bis 10 C-Atomen stehen,
wobei
M unabhängig voneinander für ein Alkalimetallion, Erdalkalimetallion, Ammoniumion, organisches Ammoniumion und/oder H steht,
c 1 oder im Fall von Erdalkalimetallionen ½ ist.

4. Aufschlämmung nach Anspruch 3, **dadurch gekennzeichnet, dass** R⁵ und R⁶ in Struktureinheit (IV) des Polykondensationsprodukts unabhängig voneinander gleich oder voneinander verschieden sind und für H, COOM_{c} und/oder Methyl stehen.

5. Aufschlämmung nach einem der Ansprüche 1 bis 4, **dadurch gekennzeichnet, dass** das Molverhältnis der Struktureinheiten [(I) + (II) + (III)]:(IV) in dem Polykondensationsprodukt 1:0,8 bis 3 beträgt.

6. Aufschlämmung nach einem der Ansprüche 1 bis 5, **dadurch gekennzeichnet, dass** das Molverhältnis der Struktureinheiten (I) : [(II) + (III)] 1:15 bis 15:1 und vorzugsweise 1:10 bis 10:1 beträgt.

7. Aufschlämmung nach einem der Ansprüche 1 bis 6, **dadurch gekennzeichnet, dass** das Molverhältnis der Struktureinheiten (II):(III) 1:0,005 bis 1:10 beträgt.

8. Aufschlämmung nach einem der Ansprüche 1 bis 7, **dadurch gekennzeichnet, dass** die Aufschlämmung das Polykondensationsprodukt in formulierter Form enthält, wobei die formulierte Form das Polykondensationsprodukt in Anteilen von 5 bis 100 Gew.-%, vorzugsweise von 10 bis 60 Gew.-% und besonders bevorzugt 15 bis 40 Gew.-%, jeweils bezogen auf die Gesamtformulierung, enthält.

9. Aufschlämmung nach einem der Ansprüche 1 bis 8, **dadurch gekennzeichnet, dass** sie das Polykondensationsprodukt als einzige Verbindung mit Dispergiereigenschaften enthält .

10. Aufschlämmung nach einem der Ansprüche 1 bis 7, **dadurch gekennzeichnet, dass** das phosphatierte Polykondensat in einer Menge von 0,05 bis 0,2 Gew.-% des festen Polykondensats, bezogen auf den Gipsgehalt, vorliegt.

11. Aufschlämmung nach einem der Ansprüche 8 bis 10, **dadurch gekennzeichnet, dass** die Formulierung zusätzlich zu dem Polykondensationsprodukt mindestens einen Entschäumer als Komponente a) und/oder eine Komponente b) mit oberflächenaktiver Wirkung enthält, wobei die Komponenten a) und b) strukturell voneinander verschieden sind.

12. Aufschlämmung nach Anspruch 11, **dadurch gekennzeichnet, dass** es sich bei der Entschäumerkomponente a) um mindestens einen Vertreter aus der Gruppe bestehend aus Mineralöl, Pflanzenöl, Silikonöl, silikonhaltigen Emulsionen, Fettsäure, Fettsäureester, organisch modifiziertem Polysiloxan, Boratester, Alkoxylat, Polyoxyalkylen-Copolymer, Ethylenoxid(EO)-Propylenoxid(PO)-Blockpolymer, acetylenischem Diol mit Entschäumereigenschaften, Phosphorsäureester der Formel P (O) (O-R₈)₃₋ₓ (O-R₉)ₓ handelt, wobei P = Phosphor, O = Sauerstoff und R₈ und R₉ unabhängig voneinander ein C₂₋₂₀-Alkyl oder eine Arylgruppe bedeuten und x = 0, 1 oder 2.

13. Aufschlämmung nach einem der Ansprüche 11 oder 12, **dadurch gekennzeichnet, dass** es sich bei der Entschäumerkomponente a) um mindestens einen Vertreter aus der Reihe bestehend aus Trialkylphosphat, Polyoxypropylen-Copolymer und/oder Glycerin/Alkohol-Acetat handelt.

14. Aufschlämmung nach einem der Ansprüche 11 bis 13, **dadurch gekennzeichnet, dass** es sich bei der Entschäumerkomponente a) um Triisobutylphosphat handelt.

15. Aufschlämmung nach einem der Ansprüche 11 bis 14, **dadurch gekennzeichnet, dass** die Entschäumerkomponente a) eine Mischung aus einem Trialkylphosphat und einem Polyoxypropylen-Copolymer darstellt.

16. Aufschlämmung nach Anspruch 11, **dadurch gekennzeichnet, dass** es sich bei der Komponente b) um mindestens einen Vertreter aus der Reihe bestehend aus Ethylenoxid-Propylenoxid(EO/PO)-Blockpolymer, Styrol/Maleinsäure-Copolymer, Fettsäurealkoholalkoxylat, Alkoholethoxylat R₁₀-(EO)-H, wobei R₁₀ = eine aliphatische Kohlenwasserstoffgruppe mit 1 bis 25 Kohlenstoffatomen, acetylenischem Diol, Monoalkylpolyalkylen, ethoxyliertem Nonylphenol, Alkylsulfat, Alkylethersulfat, Alkylethersulfonat oder Alkylethercarboxylat handelt.

17. Aufschlämmung nach einem der Ansprüche 11 und 16, **dadurch gekennzeichnet, dass** die Komponente b) einen Alkohol mit einer Polyalkylengruppe umfasst, wobei die Polyalkylengruppe eine Kohlenstoffatomkettenlänge von 2 bis 20 Kohlenstoffatomen aufweist.

18. Aufschlämmung nach Anspruch 17, **dadurch gekennzeichnet, dass** die Polyalkylengruppe eine Kohlenstoffkettenlänge von 3 bis 12 Kohlenstoffatomen aufweist.

19. Aufschlämmung nach einem der Ansprüche 11 und 17 bis 18, **dadurch gekennzeichnet, dass** sie die Entschäumerkomponente a) in freier Form enthält.

20. Aufschlämmung nach einem der Ansprüche 11 bis 19, **dadurch gekennzeichnet, dass** die Entschäumerkomponente a) in Mengen von 0,01 bis 10 Gew.-% vorliegt und/oder die oberflächenaktive Komponente b) in Mengen von 0,01 bis 10 Gew.-% vorliegt, jeweils bezogen auf das Gesamtgewicht der Formulierung.

21. Aufschlämmung nach einem der Ansprüche 11 bis 20, **dadurch gekennzeichnet, dass** die Entschäumerkomponente a) und/oder die oberflächenaktive Komponente b) unabhängig voneinander jeweils in einer Menge von 0,01 bis 5 Gew.-%, jeweils bezogen auf das Gesamtgewicht der Formulierung, vorliegen.

22. Aufschlämmung nach einem der Ansprüche 1 bis 21, **dadurch gekennzeichnet, dass** sie Ton enthält.

23. Aufschlämmung nach einem der Ansprüche 1 bis 22, **dadurch gekennzeichnet, dass** die Gipskomponente Ton enthält.

24. Aufschlämmung nach jedem der Ansrpüche 22 und 23, **dadurch gekennzeichnet, dass** der Ton quellfähig ist und vorzugsweise wasserquellfähig ist und weiter bevorzugt aus der Gruppe Smectit, Montmorrillonit, Bentonit, Vermiculit, Hectorit ausgewählt ist oder aus der Gruppe der Kaoline, Feldspäte und Glimmer oder Mischungen daraus ausgewählt ist.

25. Aufschlämmung nach einem der Ansprüche 22 bis 24, **dadurch gekennzeichnet, dass** sie quellfähigen Ton in Mengen von ≤ 20 Gew.-%, vorzugsweise ≤ 15 Gew.-%, weiter bevorzugt ≤ 10 Gew.-% und ganz besonders bevorzugt von 0,5 bis 5 Gew.-%, bezogen auf den Gips, enthält.

26. Aufschlämmung nach einem der Ansprüche 1 bis 25, **dadurch gekennzeichnet, dass** sie zusätzlich zu dem Polykondensationsprodukt und gegebenfalls a) und/oder b) als Komponente c) mindestens eine aus der Reihe bestehend aus niedrig geladenem Polymer, neutralem Polymer oder Polyvinylalkohol ausgewählte Verbindung, vorzugsweise in formulierter Form und mit Ton maskierenden Eigenschaften, enthält.

27. Aufschlämmung nach Anspruch 26, **dadurch gekennzeichnet, dass** sie die Komponente c) in Mengen von 1 bis 50 Gew.-%, vorzugsweise von 5 bis 40 Gew.-% und besonders bevorzugt in Mengen von 10 bis 30 Gew.-%, jeweils bezogen auf das Gesamtgewicht der Formulierung, enthält.

28. Aufschlämmung nach einem der Ansprüche 26 oder 27, **dadurch gekennzeichnet, dass** das niedrig geladene Polymer verzweigt ist und die Seitenkette vorzugsweise aus einem Polyether und/oder einem Polyester besteht.

29. Aufschlämmung nach einem der Ansprüche 26 bis 28, **dadurch gekennzeichnet, dass** es sich bei dem niedrig geladenen Polymer um einen Polycarboxylatether und/oder einen Polycarboxylatester handelt, vorzugsweise mit EO-Seitenketten und/oder mit einem Carboxylatanteil von bis zu 83 Mol-%, vorzugsweise bis zu 75 Mol-%.

30. Aufschlämmung nach einem der Ansprüche 26 bis 29, **dadurch gekennzeichnet, dass** das niedrig geladene Polymer c) aus mindestens einem Monomer aufgebaut ist, das aus der Reihe bestehend aus Polyethermonoacrylat, Polyethermonomethacrylat, Polyethermonoallylether, Polyethermonomaleat, monovinyliertem Polyether oder Mischungen davon ausgewählt ist.

31. Aufschlämmung nach Anspruch 30, **dadurch gekennzeichnet, dass** es sich bei dem Polyether um ein Alkylenoxidpolymer mit einem Molekulargewicht von 500 bis 10.000, vorzugsweise von 750 bis 7.500 und insbesondere 1.000 bis 5.000 handelt.

32. Aufschlämmung nach Anspruch 31, **dadurch gekennzeichnet, dass** es sich bei dem Alkylenoxid um Ethylenoxid, Propylenoxid, Butylenoxid oder Mischungen davon handelt.

33. Aufschlämmung nach einem der Ansprüche 26 bis 32, **dadurch gekennzeichnet, dass** das niedrig geladene Polymer c) aus mindestens einem Monomer aufgebaut ist, das aus der Reihe bestehend aus Polypropylenglykolacrylat, Polypropylenglykolmethacrylaten, Polyethylenglycolacrylat, Polyethylenglykolmethacrylat, Polypropylenglykolmonovinylether, Polyethylenglykolmonovinylether, Alkoxy- bzw. Aryloxypolyethylenglykolacrylat, Alkoxy- bzw. Aryloxypolyethylenglykolmethacrylaten, Alkoxy- bzw. Aryloxypolyethylenglykolmonovinylether, Acrylaten, Methacrylaten und Monovinylethern eines Oxyalkylen- und Oxypropylenblock- bzw. statistischen Copolymers, Polypropylenglykolallylether, Polyethylenglykolallylether, Polyethylenglykolmonomaleat, Polypropylenglykolmonomaleat und beliebigen Mischungen davon ausgewählt ist.

34. Aufschlämmung nach einem der Ansprüche 26 bis 33, **dadurch gekennzeichnet, dass** das niedrig geladene Polymer c) eine Carbonsäuregruppe trägt, die vorzugsweise aus der Reihe bestehend aus Acrylsäure, Methacrylsäure, Maleinsäure, Fumarsäure, Itaconsäure bzw. deren Anhydriden ausgewählt ist.

35. Aufschlämmung nach einem der Ansprüche 26 bis 34, **dadurch gekennzeichnet, dass** das niedrig geladene Polymer c) eine Sulfonsäuregruppe trägt, die aus der Reihe bestehend aus 2-Acrylamid-2-methylpropansulfonsäure (AMPS), Vinylsulfonsäure, Allylethersulfonsäure, 2-Sulfoethylmethacrylsäure, Styrolsulfonsäure, Methallylsulfonsäure, deren Natrium-, Kalium- und Ammoniumsalzen und beliebigen Mischungen davon und insbesondere der AMPS und Vinylsulfonsäure ausgewählt ist.

36. Aufschlämmung nach einem der Ansprüche 26 bis 35, **dadurch gekennzeichnet, dass** das neutrale Polymer c) aus neutralen Monomer-Bausteinen aufgebaut ist, die insbesondere aus der Reihe bestehend aus Acrylsäurealkylestern und Methacrylsäurealkylestern sowie deren Hydroxyalkylestern mit bis zu 5 C-Atomen, insbesondere Hydroxyethylacrylat und Hydroxypropylacrylat bzw. Hydroxyethylmethacrylat und Hydroxypropylmethyacrylat, sowie Vinylacetat, N-Vinylpyrrolidon, N-Vinylcaprolactam, Styrol und Methylstyrol ausgewählt sind.

37. Aufschlämmung nach einem der Ansprüche 1 bis 36, **dadurch gekennzeichnet, dass** der Gips aus der Gruppe bestehend aus Calciumsulfat, gebranntem Gips, Calciumsulfathemihydrat, Calciumsulfatanhydrit, Stuckgips oder synthetischen Gipsen, die vorzugsweise als Nebenprodukt bei der Rauchgasentschwefelung anfallen, ausgewählt ist.

38. Verwendung der Aufschlämmung nach einem der Ansprüche 1 bis 37 zur Bereitstellung einer Bauplatte und vorzugsweise einer Gipsplatte und von Bodenspachtelmassen, Pasten und Fugenmörteln.

39. Verwendung nach Anspruch 38, **dadurch gekennzeichnet, dass** die Bauplatte Folgendes umfasst:
einen Plattenkörper, umfassend:
eine Calciumsulfatdihydrat-Matrix und
eine Polykondensationskomponente, die Folgendes umfasst:
eine erste Polykondensationswiederholungseinheit mit einer Polyetherseitenkette und einer aromatischen Untereinheit oder einer heteroaromatischen Untereinheit;
eine zweite Polykondensationswiederholungseinheit mit einer OP(OH)₂-Gruppe und einer aromatischen Untereinheit oder einer heteroaromatischen Untereinheit; und
vorzugsweise zusätzlich
eine dritte Polykondensationswiederholungseinheit mit einer aromatischen Untereinheit oder einer heteroaromatischen Untereinheit;
wobei die zweite Polykondensationswiederholungseinheit und die dritte Polykondensationswiederholungseinheit sich ausschließlich dadurch unterscheiden, dass die OP(OH)₂-Gruppen der zweiten Polykondensationswiederholungseinheit in der dritten Polykondensationswiederholungseinheit durch H ersetzt sind, und die dritte Polykondensationswiederholungseinheit nicht mit der ersten Polykondensationswiederholungseinheit identisch ist;
und vorzugsweise zusätzlich
eine aus der Gruppe bestehend aus kammartig verzweigtem Polymer mit Polyetherseitenketten, Naphthalinsulfonat-Formaldehyd-Kondensat, Melaminsulfonat-Formaldehyd-Kondensat und Mischungen davon ausgewählte Dispergiermittelkomponente.

40. Verwendung nach Anspruch 39, wobei die Dispergierkomponente und/oder die Polykondensationskomponente ferner eine Entschäumerkomponente umfasst bzw. umfassen.

41. Verwendung nach Anspruch 39, wobei die Dispergiermittelkomponente das kammartig verzweigte Polymer mit Polyetherseitenketten ist und Folgendes umfasst:
mindestens eine Polycarboxylatwiederholungseinheit, die sich von einem olefinisch ungesättigten Monocarbonsäure-Comonomer oder einem Ester oder einem Salz davon und einem olefinisch ungesättigten Sulfonsäure-Comonomer oder einem Salz davon ableitet; und
mindestens eine zweite Polycarboxylatwiederholungseinheit der allgemeinen Formel (V) 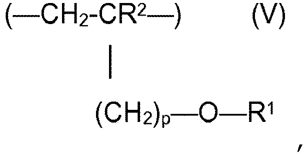
wobei R¹ für 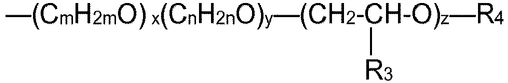
steht und R² für H oder einen aliphatischen Kohlenwasserstoffrest mit 1 bis 5 C-Atomen steht; R³ für einen unsubstituierten der substituierten Arylrest steht und R⁴ für H, einen aliphatischen Kohlenwasserstoffrest mit 1 bis 20 C-Atomen, einen cycloaliphatischen Kohlenwasserstoffrest mit 5 bis 8 C-Atomen, einen substituierten Arylrest mit 6 bis 14 C-Atomen oder einen Vertreter der folgenden Gruppe steht: 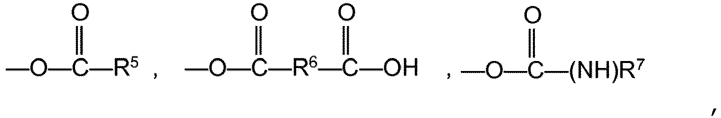
wobei R⁵ und R⁷ jeweils für einen Alkyl-, Aryl-, Aralkyl- oder Alkarylrest stehen;
R⁶ für einen Alkyliden-, Aryliden-, Aralkyliden- oder Alkarylidenrest steht;
p = 0, 1, 2, 3 oder 4; m und n jeweils unabhängig voneinander für 2, 3, 4 oder 5 stehen;
x und y jeweils unabhängig voneinander für eine ganze Zahl ≤ 350 stehen und z 0 bis etwa 200 beträgt;
und
wobei entweder die ersten und zweiten Polycarboxylatwiederholungseinheiten keine innermolekularen Unterschiede aufweisen oder die ersten und zweiten Polycarboxylatwiederholungseinheiten innermolekulare Unterschiede in Bezug auf mindestens einen der Reste R¹; R²; R³; R⁴; R⁵; R⁶; R⁷; m; n; x; y; und z aufweisen und wobei die Unterschiede die Zusammensetzung und Länge der Seitenketten betreffen.

42. Verwendung nach Anspruch 39, wobei die erste Polycarboxylatwiederholungseinheit in Mengen von 30 bis 99 Mol-% und die zweite Polycarboxylatwiederholungseinheit in Mengen von etwa 70 bis etwa 1 Mol-% der Dispergiermittelkomponente vorliegt.

43. Verwendung nach Anspruch 39, wobei die erste Polykondensationswiederholungseinheit der Polykondensationskomponente durch die folgende Formel VI wiedergegeben wird: 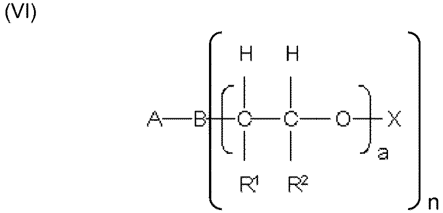
wobei A 5 bis 10 C-Atome aufweist und für eine substituierte oder unsubstituierte aromatische oder heteroaromatische Verbindung steht; B für N, NH oder O steht; n für 2 steht, wenn B für N steht, und n für 1 steht, wenn B für NH oder O steht; R¹ und R² jeweils unabhängig voneinander für einen verzweigten oder geradkettigen C₁- bis C₁₀-Alkylrest, C₅- bis C₈-Cycloalkylrest, Arylrest, Heteroarylrest oder H stehen; a für eine ganze Zahl von etwa 1 bis etwa 300 steht; X für einen verzweigten oder geradkettigen C₁- bis C₁₀-Alkylrest, C₅- bis C₈-Cycloalkylrest, Arylrest, Heteroarylrest oder H steht;
wobei die zweite Polykondensationswiederholungseinheit der Polykondensationskomponente durch die folgende Formel (VII) wiedergegeben wird: 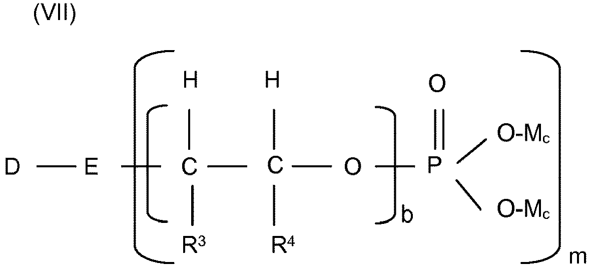
wobei die dritte Polykondensationswiederholungseinheit der Polykondensationskomponente durch die folgende Formel (VIII) wiedergegeben wird: 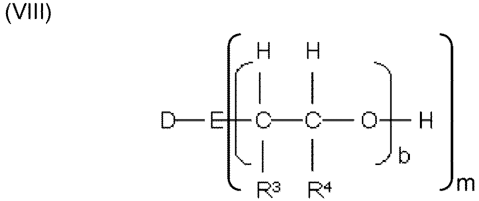
wobei in Formel (VII) und Formel (VIII) D für eine substituierte oder unsubstituierte heteroaromatische Verbindung mit 5 bis 10 C-Atomen steht; E für N, NH oder O steht; m für 2 steht, wenn E für N steht, und m für 1 steht, wenn E für NH oder O steht; R³ und R⁴ jeweils unabhängig voneinander für einen verzweigten oder geradkettigen C₁- bis C₁₀-Alkylrest, C₅- bis C₈-Cycloalkylrest, Arylrest, Heteroarylrest oder H stehen; b für eine ganze Zahl von 0 bis 300 steht; M für ein Alkalimetallion, Erdalkalimetallion, organisches Ammoniumion und/oder H steht und c ½ ist, wenn M für ein Erdalkalimetallion steht, und c anderenfalls 1 ist; und wobei A, B, R¹, R², a, X, D, E, R³, R⁴, b und M unter den einzelnen ersten Polykondensationswiederholungseinheiten unabhängig voneinander jeweils gleich oder voneinander verschieden sind.

44. Verwendung nach Anspruch 39, wobei der Plattenkörper rechteckig ist und eine Dicke von bis zu 2 Zoll (50 mm) aufweist.

45. Verwendung nach Anspruch 39, wobei der Plattenkörper ferner ein oder mehrere Verblendmaterialien auf einer oder mehreren Oberflächen des Plattenkörpers umfasst.

46. Verwendung nach Anspruch 39, wobei die Platte ferner ein Additiv umfasst, das aus der Gruppe bestehend aus einem Abbindebeschleuniger, einem Abbindeverzögerer, einem Antiablaufmittel, einem Bindemittel, einem Entstaubungsmittel, einem Schäumungsmittel, einem Verstärkungsmaterial, einem Biozid und Kombinationen davon ausgewählt ist.

47. Verwendung nach Anspruch 39, wobei die Calciumsulfatdihydrat-Matrix mindestens 50 Gew.-% aller anorganischen Bindemittelkomponenten in dem Plattenkörper umfasst.

48. Verwendung nach Anspruch 39, bei der man:
Calciumsulfathemihydrat, Wasser und die Polykondensationskomponente zur Bildung einer Aufschlämmung kombiniert;
die Aufschlämmung auf ein Förderband aufgibt;
die Aufschlämmung in eine Platte formt und
das Calciumsulfathemihydrat unter Bildung einer Calciumsulfatdihydrat-Matrix hydratisieren lässt.

49. Verwendung nach Anspruch 48, ferner umfassend die Zugabe eines Schäumungsmittels zu der Aufschlämmung.

50. Verwendung nach Anspruch 49, wobei das Schäumungsmittel in Form eines Schaums vorliegt.

51. Verwendung nach Anspruch 48, ferner umfassend die Mitverwendung eines aus der Gruppe bestehend aus einem Abbindebeschleuniger, einem Abbindeverzögerer, einem Antiablaufmittel, einem Bindemittel, einem Entstaubungsmittel, einem Schäumungsmittel, einem Verstärkungsmaterial, einem Biozid und Kombinationen davon ausgewählten Additivs in der Aufschlämmung.

52. Verfahren zum Herstellen eines Gipsprodukts nach Anspruch 1, bei dem man:
Calciumsulfathemihydrat, Wasser und eine erste Dosierung einer ersten Polykondensatdispergierverbindung kombiniert;
bei Bedarf eine zweite Dosierung eines zweiten Dispergiermittels zugibt;
Eigenschaften der Gipsaufschlämmung prüft;
die Aufschlämmung zu einem Produkt formt;
dem Erzeugnis das Erstarren ermöglicht;
Eigenschaften des Produkts ermittelt;
basierend auf den Eigenschaften aus dem Ermittlungs- und den Prüfungsschritt die erste Dosierung des ersten Dispergiermittels oder die zweite Dosierung des zweiten Dispergiermittels zur Variation des Verhältnisses von erstem Dispergiermittel zu zweitem Dispergiermittel ändert.

53. Verfahren nach nach Anspruch 52, wobei das erste Dispergiermittel Folgendes umfasst:
eine erste Polykondensatwiederholungseinheit mit einer Polyetherseitenkette und einer aromatischen Untereinheit oder einer heteroaromatischen Untereinheit;
eine zweite Polykondensatwiederholungseinheit mit einer OP(OH)₂-Gruppe und einer aromatischen Untereinheit oder einer heteroaromatischen Untereinheit und
eine dritte Polykondensationswiederholungseinheit mit einer aromatischen Untereinheit oder einer heteroaromatischen Untereinheit;
wobei die zweite Polykondensatwiederholungseinheit und die dritte Polykondensatwiederholungseinheit sich ausschließlich dadurch unterscheiden, dass die OP(OH)₂-Gruppen der zweiten Polykondensatwiederholungseinheit in der dritten Polykondensatwiederholungseinheit durch H ersetzt sind, und die dritte Polykondensatwiederholungseinheit nicht mit der ersten Polykondensatwiederholungseinheit identisch ist.

54. Verfahren nach Anspruch 52, wobei das zweite Dispergiermittel Folgendes umfasst: Zusammensetzungen mit Dispergiereigenschaften, die aus der Gruppe bestehend aus einem kammartig verzweigten Polymer mit Polyetherseitenketten, Naphthalinsulfonat-Formaldehyd-Kondensat, Melaminsulfonat-Formaldehyd-Kondensat und Mischungen davon ausgewählt sind.

55. Verfahren nach Anspruch 52, ferner umfassend die Mitverwendung eines Schäumungsmittels in der Gipsaufschlämmung.

56. Verfahren nach Anspruch 52, wobei der Schritt des Kombinierens in einem Mischer stattfindet und wobei der Schritt des Kombinierens ferner das Mischen des ersten Dispergiermittels, des zweiten Dispergiermittels und von Kombinationen davon mit dem Wasser vor dem Eintritt in den Mischer umfasst.

57. Verfahren nach Anspruch 52, ferner umfassend das Vermischen der Gipsaufschlämmung mit einem aus der Gruppe bestehend aus einem Abbindebeschleuniger, einem Abbindeverzögerer, einem Antiablaufmittel, einer Stärke, einem Biozid, einem Bindemittel, einem Schäumungsmittel, einem Verstärkungsmaterial, einem Entstaubungsmittel und Mischungen davon ausgewählten Gipsadditiv.

58. Verfahren nach Anspruch 52, wobei die erste Additivmischung und/oder die zweite Additivmischung ferner eine Entschäumerkomponente umfasst.

## Revendications

1. Suspension de gypse contenant un composé doté de propriétés dispersantes **caractérisé en ce que** la suspension contient, en tant que dispersant, un produit de polycondensation à base de phosphate en tant qu'unique agent doté de propriétés dispersantes, en tant qu'une solution aqueuse et en une quantité de 0,01 à 0,5 % en poids sur la base de la teneur en gypse, le produit de polycondensation contenant
(I) au moins une unité structurale dotée d'une sous-unité aromatique ou hétéroaromatique et d'une chaîne latérale de type polyéther et
(II) au moins une unité structurale phosphatée dotée d'une sous-unité aromatique ou hétéroaromatique,
et préférablement de plus
(III) au moins une unité structurale dotée d'une sous-unité aromatique ou hétéroaromatique,
l'unité structurale (II) et l'unité structurale (III) différant exclusivement **en ce que** le groupe OP(OH)₂ de l'unité structurale (II) est remplacé par H dans l'unité structurale (III), et l'unité structurale (III) n'est pas identique à l'unité structurale (I).

2. Suspension selon la revendication 1, **caractérisée en ce que** les unités structurales (I), (II) et le cas échéant (III) du produit de polycondensation sont représentées par les formules suivantes 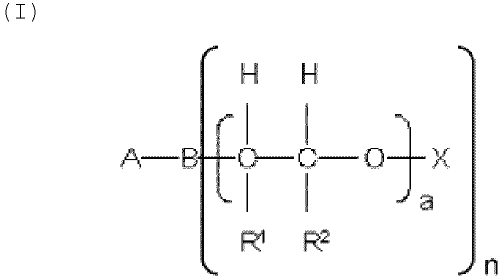
où
A sont identiques ou différents et sont représentés par un composé aromatique ou hétéroaromatique possédant 5 à 10 atomes de C,
où B sont identiques ou différents et sont représentés par N, NH ou O
où
n = 2, si B = N, et n = 1, si B = NH ou O
où
R¹ et R², indépendamment l'un de l'autre, sont identiques ou différents et sont représentés par un radical C₁₋₁₀-alkyle ramifié ou à chaîne linéaire, un radical C₅₋₈-cycloalkyle, un radical aryle, un radical hétéroaryle ou H,
où
a sont identiques ou différents et sont représentés par un entier de 1 à 300,
où X
sont identiques ou différents et sont représentés par un radical C₁₋₁₀-alkyle ramifié ou à chaîne linéaire, un radical C₅₋₈-cycloalkyle, un radical aryle, un radical hétéroaryle ou H, 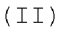 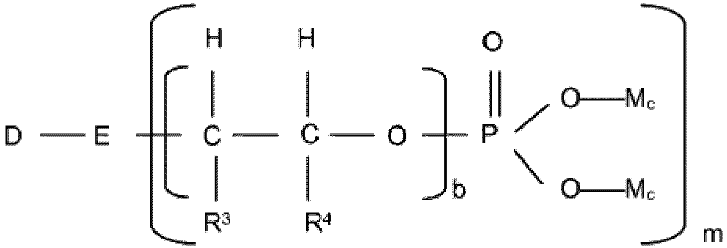 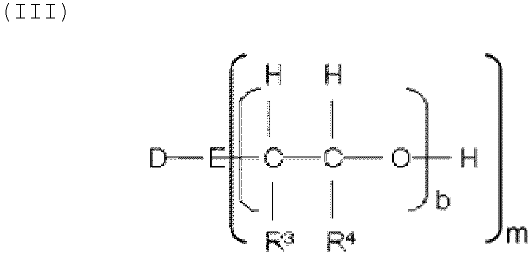
pour (II) et (III) en chaque cas :
où
D sont identiques ou différents et sont représentés par un composé hétéroaromatique substitué ou non substitué possédant 5 à 10 atomes de C,
où
E sont identiques ou différents et sont représentés par N, NH ou O
où
m = 2, si E = N, et m = 1, si E = NH ou O où
R³ et R⁴, indépendamment l'un de l'autre, sont identiques ou différents et sont représentés par un radical C₁₋₁₀-alkyle ramifié ou à chaîne linéaire, un radical C₅₋₈-cycloalkyle, un radical aryle, un radical hétéroaryle ou H,
où b sont identiques ou différents et sont représentés par un entier de 0 à 300,
où
M est indépendamment l'un de l'autre un ion de métal alcalin, un ion de métal alcalino-terreux, un ion ammonium, un ion ammonium organique et/ou H,
c est 1 ou dans le cas des ions de métal alcalino-terreux est ½.

3. Suspension selon l'une ou l'autre des revendications 1 et 2, **caractérisée en ce que** le produit de polycondensation contient une unité structurale supplémentaire (IV) qui est représentée par la formule suivante 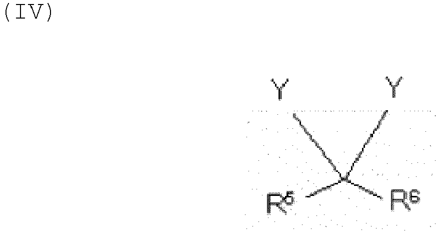
où
Y, indépendamment l'un de l'autre, sont identiques ou différents et sont représentés par (II), (III), (IV) ou des constituants supplémentaires du produit de polycondensation,
où
R⁵ sont identiques ou différents et sont représentés par H, CH₃, COOM_{c} ou un composé aromatique ou hétéroaromatique substitué ou non substitué possédant 5 à 10 atomes de C,
où
R⁶ sont identiques ou différents et sont représentés par H, CH₃, COOM_{c} ou un composé aromatique ou hétéroaromatique substitué ou non substitué possédant 5 à 10 atomes de C,
où
M est indépendamment l'un de l'autre un ion de métal alcalin, un ion de métal alcalino-terreux, un ion ammonium, un ion ammonium organique et/ou H,
c est 1 ou dans le cas des ions de métal alcalino-terreux est ½.

4. Suspension selon la revendication 3, **caractérisée en ce que** R⁵ et R⁶ dans l'unité structurale (IV) du produit de polycondensation, indépendamment l'un de l'autre, sont identiques ou différents et sont représentés par H, COOM_{c} et/ou méthyle.

5. Suspension selon l'une quelconque des revendications 1 à 4, **caractérisée en ce que** le rapport molaire des unités structurales [(I) + (II) + (III)]:(IV) dans le produit de condensation est de 1:0,8 à 3.

6. Suspension selon l'une quelconque des revendication 1 à 5, **caractérisée en ce que** le rapport molaire des unités structurales (I) : [(II) + (III)] est 1:15 à 15:1 et préférablement de 1:10 à 10:1.

7. Suspension selon l'une quelconque des revendications 1 à 6, **caractérisée en ce que** le rapport molaire des unités structurales (II):(III) est de 1:0,005 à 1:10.

8. Suspension selon l'une quelconque des revendications 1 à 7, **caractérisée en ce que** la suspension contient le produit de polycondensation sous forme formulée, la forme formulée contenant le produit de polycondensation en des proportions de 5 à 100 % en poids, préférablement de 10 à 60 % en poids et particulièrement préférablement de 15 à 40 % en poids, chacun sur la base de la formulation totale.

9. Suspension selon l'une quelconque des revendications 1 à 8, **caractérisée en ce qu'**elle contient le produit de polycondensation en tant qu'unique composé doté de propriétés dispersantes.

10. Suspension selon l'une quelconque des revendications 1 à 7, **caractérisée en ce que** le polycondensat phosphaté est présent en une quantité de 0,05 à 0,2 % en poids du polycondensat solide, sur la base de la teneur en gypse.

11. Suspension selon l'une quelconque des revendications 8 à 10, **caractérisée en ce que** la formulation contient, en plus du produit de polycondensation, au moins un agent antimousse en tant que composant a) et/ou un composant b) possédant un effet tensioactif, les composants a) et b) étant structuralement différent l'un de l'autre.

12. Suspension selon la revendication 11, **caractérisée en ce que** le composant antimousse a) est au moins un représentant du groupe constitué par une huile minérale, une huile végétale, une huile de silicone, des émulsions contenant une silicone, un acide gras, un ester d'acide gras, un polysiloxane modifié de manière organique, un ester de borate, un alcoxylate, un copolymère de polyoxyalkylène, un polymère à blocs oxyde d'éthylène (OE)-oxyde de propylène (OP), un diol acétylénique possédant des propriétés antimousse, un ester d'acide phosphorique de formule P(O) (O-R₈)₃₋ₓ (O-R₉)ₓ dans laquelle P = phosphore, O = oxygène et R₈ et R₉, indépendamment l'un de l'autre, désignent un C₂₋₂₀-alkyle ou un groupe aryle et x = 0, 1 ou 2.

13. Suspension selon l'une ou l'autre des revendications 11 et 12, **caractérisée en ce que** le composant antimousse a) est au moins un représentant de la série constituée par un phosphate de trialkyle, un copolymère de polyoxypropylène et/ou un acétate de glycérol/d'alcool.

14. Suspension selon l'une quelconque des revendications 11 à 13, **caractérisée en ce que** le composant antimousse a) est le phosphate de triisobutyle.

15. Suspension selon l'une quelconque des revendications 11 à 14, **caractérisée en ce que** le composant antimousse a) représente un mélange d'un phosphate de trialkyle et d'un copolymère de polyoxypropylène.

16. Suspension selon la revendication 11, **caractérisée en ce que** le composant b) est au moins un représentant de la série constituée par un copolymère à blocs oxyde d'éthylène/oxyde de propylène (EO/PO), un copolymère styrène/acide maléique, un alcoxylate d'alcool d'acide gras, un éthoxylate d'alcool R₁₀-(EO)-H où R₁₀ = un groupe hydrocarboné aliphatique possédant 1 à 25 atome(s) de carbone, un diol acétylénique, un monoalkylepolyalkylène, le nonylphénol éthoxylé, un sulfate d'alkyle, un sulfate d'alkyléther, un sulfonate d'alkyléther et un carboxylate d'alkyléther.

17. Suspension selon l'une ou l'autre des revendications 11 et 16, **caractérisée en ce que** le composant b) comprend un alcool possédant un groupe polyalkylène, le groupe polyalkylène possédant une longueur de chaîne carbonée de 2 à 20 atomes de carbone.

18. Suspension selon la revendication 17, **caractérisée en ce que** le groupe polyalkylène possède une longueur de chaîne carbonée de 3 à 12 atomes de carbone.

19. Suspension selon l'une quelconque des revendications 11 et 17 et 18, **caractérisée en ce qu'**elle contient le composant antimousse a) sous forme libre.

20. Suspension selon l'une quelconque des revendications 11 à 19, **caractérisée en ce que** le composant antimousse a) est présent en des quantités de 0,01 à 10 % en poids et/ou le composant tensioactif b) est présent en des quantités de 0,01 à 10 % en poids, en chaque cas sur la base du poids total de la formulation.

21. Suspension selon l'une quelconque des revendications 11 à 20, **caractérisée en ce que** le composant antimousse a) et/ou le composant tensioactif b), indépendamment l'un de l'autre, sont présents en chaque cas en une quantité de 0,01 à 5 % en poids, en chaque cas sur la base du poids total de la formulation.

22. Suspension selon l'une quelconque des revendications 1 à 21, **caractérisée en ce qu'**elle contient de l'argile.

23. Suspension selon l'une quelconque des revendications 1 à 22, **caractérisée en ce que** le composant de gypse contient de l'argile.

24. Suspension selon chacune des revendications 22 et 23, **caractérisée en ce que** l'argile est gonflable et préférablement gonflable à l'eau et plus préférablement choisie dans le groupe de la smectite, de la montmorillonite, de la bentonite, de la vermiculite, de l'hectorite, ou choisie dans le groupe des kaolins, du feldspath et des micas, ou des mélanges correspondants.

25. Suspension selon l'une quelconque des revendications 22 à 24, **caractérisée en ce qu'**elle contient une argile gonflable en des quantités ≤ 20 % en poids, préférablement ≤ 15 % en poids, plus préférablement ≤ 10 % en poids et le plus préférablement de 0,5 à 5 % en poids, sur la base du gypse.

26. Suspension selon l'une quelconque des revendications 1 à 25, **caractérisée en ce que**, en plus du produit de polycondensation et éventuellement a) et/ou b), elle contient au moins un composé choisi dans la série constituée par un polymère possédant une charge faible, un polymère neutre ou un poly(alcool vinylique) en tant que composant c), préférablement sous forme formulée, et comportant des propriétés de masquage d'argile.

27. Suspension selon la revendication 26, **caractérisée en ce qu'**elle contient le composant c) en des quantités de 1 à 50 % en poids, préférablement de 5 à 40 % en poids et particulièrement préférablement en des quantités de 10 à 30 % en poids, en chaque cas sur la base du poids total de la formulation.

28. Suspension selon l'une ou l'autre des revendications 26 et 27, **caractérisée en ce que** le polymère possédant une charge faible est ramifié et la chaîne latérale est préférablement constituée d'un polyéther et/ou d'un polyester.

29. Suspension selon l'une quelconque des revendications 26 à 28, **caractérisée en ce que** le polymère possédant une charge faible est un éther de polycarboxylate et/ou un ester de polycarboxylate, préférablement possédant des chaînes latérales de type OE et/ou possédant une proportion de carboxylate allant jusqu'à 83 % en moles, préférablement jusqu'à 75 % en moles.

30. Suspension selon l'une quelconque des revendications 26 à 29, **caractérisée en ce que** le polymère c) possédant une charge faible est composé d'au moins un monomère choisi dans la série constituée par un monoacrylate de polyéther, un monométhacrylate de polyéther, un monoallyléther de polyéther, un monomaléate de polyéther, un polyéther monovinylé ou des mélanges correspondants.

31. Suspension selon la revendication 30, **caractérisée en ce que** le polyéther est un polymère d'oxyde d'alkylène possédant un poids moléculaire de 500 à 10 000, préférablement de 750 à 7 500 et en particulier de 1 000 à 5 000.

32. Suspension selon la revendication 31, **caractérisée en ce que** l'oxyde d'alkylène est l'oxyde d'éthylène, l'oxyde de propylène, l'oxyde de butylène ou des mélanges correspondants.

33. Suspension selon l'une quelconque des revendications 26 à 32, **caractérisée en ce que** le polymère C) possédant une charge faible est composé d'au moins un monomère choisi dans la série constituée par un acrylate de polypropylèneglycol, des méthacrylates de polypropylèneglycol, un acrylate de polyéthylèneglycol, un méthacrylate de polyéthylèneglycol, un monovinyléther de polypropylèneglycol, un monovinyléther de polyéthylèneglycol, un acrylate d'alcoxypolyéthylèneglycol ou d'aryloxypolyéthylèneglycol, des méthacrylates d'alcoxypolyéthylèneglycol ou d'aryloxypolyéthylèneglycol, un monovinyléther d'alcoxypolyéthylèneglycol ou d'aryloxypolyéthylèneglycol, des acrylates, des méthacrylates et des monovinyléther d'un copolymère à blocs ou statistique d'oxyalkylène ou d'oxypropylène, un allyléther de polypropylèneglycol, un allyléther de polyéthylèneglycol, un monomaléate de polyéthylèneglycol, un monomaléate de polypropylèneglycol et de quelconques mélanges correspondants.

34. Suspension selon l'une quelconque des revendications 26 à 33, **caractérisée en ce que** le polymère c) possédant une charge faible porte un groupe acide carboxylique, préférablement choisi dans la série constituée par l'acide acrylique, l'acide méthacrylique, l'acide maléique, l'acide fumarique, l'acide itaconique et des anhydrides correspondants.

35. Suspension selon l'une quelconque des revendications 26 à 34, **caractérisée en ce que** le polymère c) possédant une charge faible porte un groupe acide sulfonique choisi dans la série constituée par l'acide 2-acrylamido-2-méthylpropanesulfonique (AMPS), l'acide vinylsulfonique, l'acide allyléthersulfonique, l'acide 2-sulfoéthyleméthacrylique, l'acide styrènesulfonique, l'acide méthallylsulfonique, les sels de sodium, de potassium et d'ammonium correspondants et de quelconques mélanges correspondants, et en particulier l'AMPS et l'acide vinylsulfonique.

36. Suspension selon l'une quelconque des revendications 26 à 35, **caractérisée en ce que** le polymère neutre c) est composé de blocs de construction monomériques neutres qui sont choisis en particulier dans la série constituée par des acrylates d'alkyle et des méthacrylates alkyle et des esters d'hydroxyalkyle correspondants possédant jusqu'à 5 atomes de carbone, en particulier l'acrylate d'hydroxyéthyle et l'acrylate d'hydroxypropyle ou le méthacrylate d'hydroxyéthyle et le méthacrylate d'hydroxypropyle, et l'acétate de vinyle, la N-vinylpyrrolidone, le N-vinylcaprolactame, le styrène et le méthylstyrène.

37. Suspension selon l'une des revendications 1 à 36, **caractérisée en ce que** le gypse est choisi dans le groupe du sulfate de calcium, du gypse calciné, de l'hémihydrate de sulfate de calcium, de l'anhydrite de sulfate de calcium, du plâtre de Paris, et des gypses synthétiques, préférablement formés en tant qu'un sous-produit de la désulfurisation de gaz de combustion.

38. Utilisation de la suspension selon l'une quelconque des revendications 1 à 37 pour la production d'un panneau de construction et préférablement une plaque de gypse, des chapes de sol, des pâtes et des coulis.

39. Utilisation selon la revendication 38, **caractérisée en ce que** le panneau de construction comprend :
un corps de panneaux comprenant :
une matrice de dihydrate de sulfate de calcium ; et
un composant de polycondensation comprenant :
un premier motif répétitif de polycondensation possédant une chaîne latérale de type polyéther et l'un dans le groupe constitué par une sous-unité aromatique et une sous-unité hétéroaromatique ;
un deuxième motif répétitif de polycondensation possédant un groupe OP(OH)₂ et l'un dans le groupe constitué par une sous-unité aromatique et une sous-unité hétéroaromatique ; et préférablement de plus un troisième motif répétitif de polycondensation possédant l'un dans le groupe constitué par une sous-unité aromatique et une sous-unité hétéroaromatique ;
ledit deuxième motif répétitif de polycondensation et ledit troisième motif répétitif de polycondensation différant exclusivement **en ce que** les groupes OP(OH)₂ dudit deuxième motif répétitif de polycondensation sont remplacés par H dans ledit troisième motif répétitif de polycondensation, et ledit troisième motif répétitif de polycondensation n'est pas identique audit premier motif répétitif de polycondensation ; et préférablement de plus
un composant dispersant choisi dans le groupe constitué par un polymère ramifié en peigne possédant des chaînes latérales de type polyéther, un condensat naphtalènesulfonate-formaldéhyde, un condensat mélaminesulfonate-formaldéhyde et des mélanges correspondants.

40. Utilisation selon la revendication 39, l'un dans le groupe constitué par ledit composant dispersant, ledit composant de polycondensation ou les deux comprenant en outre un composant antimousse.

41. Utilisation selon la revendication 39, ledit composant dispersant étant ledit copolymère ramifié en peigne possédant des chaînes latérales de type polyéther et comprenant :
au moins un premier motif répétitif de type polycarboxylate issu d'un comonomère de type acide monocarboxylique oléfiniquement insaturé ou d'un ester ou d'un sel correspondant et d'un comonomère de type acide sulfonique oléfiniquement insaturé ou d'un sel correspondant ; et
au moins un deuxième motif répétitif de type polycarboxylate de formule générale (V) 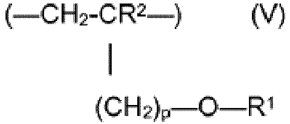
R¹ étant 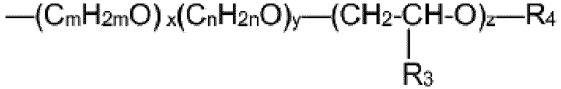
et R² étant H ou un radical hydrocarboné aliphatique possédant 1 à 5 atome (s) de C ; R³ étant un radical aryle non substitué ou substitué et R⁴ étant H, un radical hydrocarboné aliphatique possédant 1 à 20 atome (s) de C, un radical hydrocarboné cycloaliphatique possédant 5 à 8 atomes de C, un radical aryle substitué possédant 6 à 14 atomes de C, ou l'un dans le groupe constitué par : 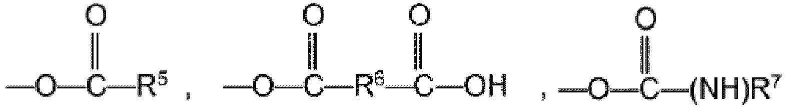
R⁵ et R⁷ représentant chacun un radical alkyle, aryle, aralkyle ou alkaryle ;
R⁶ représentant un radical alkylidène, arylène, aralkylidène ou alkarylidène ;
p = 0, 1, 2, 3 ou 4 ; m et n, indépendamment l'un de l'autre, étant chacun 2, 3, 4 ou 5 ;
x et y, indépendamment l'un de l'autre, étant chacun un entier ≤ 350 ; et z étant de 0 à environ 200 ; et
l'un et l'autre des premier et deuxième motifs répétitifs de type polycarboxylate ne possédant pas de différences moléculaires internes ou lesdits premier et deuxième motifs répétitifs de type polycarboxylate possédant des différences moléculaires internes en ce qui concerne au moins l'un desdits radicaux R¹ ; R² ; R³ ; R⁴ ; R⁵ ; R⁶ ; R⁷ ; m ; n ; x ; y ; et z, et les différences concernant la composition et la longueur des chaînes latérales.

42. Utilisation selon la revendication 39, ledit premier motif répétitif de type polycarboxylate étant présent en des quantités de 30 à 99 % en moles et ledit deuxième motif répétitif de type polycarboxylate étant présent en des quantités d'environ 70 à environ 1 % en moles du composant dispersant.

43. Utilisation selon la revendication 39, ledit premier motif répétitif de polycondensation du composant de polycondensation étant représenté par la formule VI :
(VI) 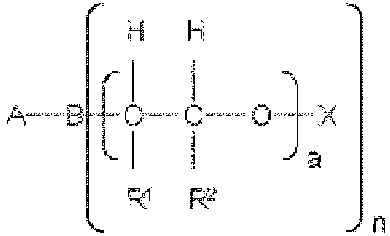
A possédant 5 à 10 atomes de C et étant un composé aromatique ou hétéroaromatique substitué ou non substitué ; B étant N, NH ou O ; n étant 2 si B est N et n étant 1 si B est NH ou O ; R¹ et R², indépendamment l'un de l'autre, étant chacun un radical C₁₋₁₀-alkyle ramifié ou à chaîne linéaire, un radical C₅₋₈-cycloalkyle, un radical aryle, un radical hétéroaryle ou H ; a étant un entier d'environ 1 à environ 300, X étant un radical C₁₋₁₀-alkyle ramifié ou à chaîne linéaire, un radical C₅₋₈-cycloalkyle, un radical aryle, un radical hétéroaryle ou H ;
ledit deuxième motif répétitif de polycondensat dudit composant de polycondensation étant représenté par la formule (VII) :
(VII) 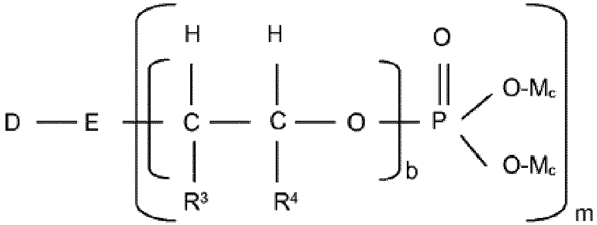
ledit troisième motif répétitif de polycondensat dudit composant de polycondensation étant représenté par la formule (VIII) :
(VIII) 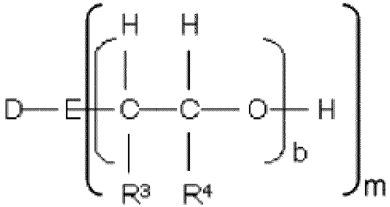
où, dans la formule (VII) et la formule (VIII), D est un composé hétéroaromatique substitué ou non substitué possédant 5 à 10 atomes de C ; E est N, NH ou O ; m est 2 si E est N et m est 1 si E est NH ou O ; R³ et R⁴, indépendamment l'un de l'autre, sont chacun un radical C₁₋₁₀-alkyle ramifié ou à chaîne linéaire, un radical C₅₋₈-cycloalkyle, un radical aryle, un radical hétéroaryle ou H ; b est un entier de 0 à 300 ; M est un ion de métal alcalin, un ion de métal alcalino-terreux, un ion ammonium, un ion ammonium organique et/ou H, et c est ½ si M est un ion de métal alcalino-terreux, ou alors c est 1 ; et A, B, R¹, R², a, X, D, E, R³, R⁴, b, et M sont chacun, indépendamment l'un de l'autre, identiques ou différents parmi lesdits premiers motifs répétitifs individuels de polycondensat.

44. Utilisation selon la revendication 39, ledit corps de panneau étant rectangulaire et d'une épaisseur allant jusqu'à environ 2 pouces (50 mm).

45. Utilisation selon la revendication 39, ledit corps de panneau comprenant en outre un ou plusieurs matériaux de parement sur une ou plusieurs surfaces dudit corps de panneau.

46. Utilisation selon la revendication 39, le panneau comprenant en outre un additif choisi dans le groupe constitué par un accélérateur de prise, un retard de prise, un agent anti-affaissement, un agent de liaison, un agent antipoussière, un agent moussant, un matériau de renforcement, un biocide et des combinaisons correspondantes.

47. Utilisation selon la revendication 39, ladite matrice de dihydrate de sulfate de calcium représentant au moins 50 % en poids de tous les composants inorganiques de liant dans ledit corps de panneau.

48. Utilisation selon la revendication 39 comprenant :
la combinaison d'hémihydrate de sulfate de calcium, d'eau, du composant de polycondensation pour former une suspension ;
le dépôt de la suspension sur un convoyeur ;
la mise en forme de la suspension en un panneau ; et
le fait de laisser l'hémihydrate de sulfate de calcium s'hydrater et former une matrice de dihydrate de sulfate de calcium.

49. Utilisation selon la revendication 48 comprenant en outre l'ajout d'un agent moussant à la suspension.

50. Utilisation selon la revendication 49, l'agent moussant se trouvant sous forme d'une mousse.

51. Utilisation selon la revendication 48 comprenant en outre l'inclusion d'un additif choisi dans le groupe constitué par un accélérateur de prise, un retardateur de prise, un agent anti-affaissement, un agent de liaison, un agent antipoussière, un agent moussant, un matériau de renforcement, un biocide et des combinaisons correspondantes dans la suspension.

52. Procédé de fabrication d'un produit de gypse selon la revendication 1 comprenant :
la combinaison d'hémihydrate de sulfate de calcium, d'eau et d'une première dose d'un premier composé dispersant de polycondensat ;
si nécessaire, l'ajout d'une deuxième dose d'un deuxième dispersant ;
le test des propriétés de la suspension de gypse ;
la mise en forme de la suspension en un produit ;
le fait de laisser prendre le produit ;
l'identification des propriétés du produit ;
le changement du premier dosage du premier dispersant ou du deuxième dosage du deuxième dispersant pour varier le rapport du premier dispersant au deuxième dispersant sur la base des propriétés desdites étapes d'identification et desdites étapes de test.

53. Procédé selon la revendication 52, le premier dispersant comprenant :
un premier motif répétitif de polycondensat possédant une chaîne latérale de type polyéther et l'un dans le groupe constitué par une sous-unité aromatique et une sous-unité hétéroaromatique ;
un deuxième motif répétitif de polycondensat possédant un groupe OP(OH)₂ et l'un dans le groupe constitué par une sous-unité aromatique et une sous-unité hétéroaromatique ; et
un troisième motif répétitif de polycondensat possédant l'un dans le groupe constitué par une sous-unité aromatique et une sous-unité hétéroaromatique ;
le deuxième motif répétitif de polycondensat et le troisième motif répétitif de polycondensat différant exclusivement en ce que les groupes OP(OH)₂ du deuxième motif répétitif de polycondensat sont remplacés par H dans le troisième motif répétitif de polycondensat, et le troisième motif répétitif de polycondensat n'étant pas identique au premier motif répétitif de polycondensat.

54. Procédé selon la revendication 52, le deuxième dispersant comprenant : des compositions possédant des propriétés dispersantes et étant choisies dans le groupe constitué par un polymère ramifié en peigne possédant des chaînes latérales de type polyéther, un condensat de naphtalènesulfonate-formaldéhyde, un condensat de mélaminesulfonate-formaldéhyde et des mélanges correspondants.

55. Procédé selon la revendication 52 comprenant en outre l'incorporation d'un agent moussant dans la suspension de gypse.

56. Procédé selon la revendication 52, ladite étape de combinaison ayant lieu dans un mélangeur et ladite étape de combinaison comprenant en outre le mélange de l'un parmi le premier dispersant, le deuxième dispersant et des combinaisons correspondantes avec l'eau avant l'introduction dans le mélangeur.

57. Procédé selon la revendication 52 comprenant en outre le mélangeage de la suspension de gypse avec un additif de gypse choisi dans le groupe constitué par un retardateur de prise, un accélérateur de prise, un agent anti-affaissement, un amidon, un biocide, un agent de liaison, un agent moussant, un matériau de renforcement, un agent antipoussière et des mélanges correspondants.

58. Procédé selon la revendication 52, au moins l'un parmi le premier mélange d'additif et le deuxième mélange d'additif comprenant en outre un composant antimousse.
